# EUROPEAN PATENT APPLICATION

(11) **EP 1 689 201 A1**
(43) Date of publication of application: **09.08.2006**
(21) Application number: 04818979.9
(22) Date of filing: 19.11.2004
(51) Int. Cl.: H04Q 7/36

(54) **MOBILE COMMUNICATION SYSTEM USING PRIVATE NETWORK, RELAY NODE, AND RADIO BASE CONTROL STATION**

(30) Priority: 20.11.2003 JP 2003390216
(71) Applicant: NEC CORPORATION, Minato-ku, Tokyo 108-0014 (JP)
(72) Inventor: SUDA, Yukinori, NEC Corporation, Tokyo 108-0014 (JP); MOMONA, Morihisa, NEC Corporation, Tokyo 108-0014 (JP)
(74) Representative: Glawe, Delfs, Moll
(86) International application number: PCT/JP2004/017257
(87) International publication number: WO 2005/051024

(57) **Abstract**

Upon receiving a mobile communication control signaling at the time when a mobile terminal 80 makes or receives a call, VPN gateway 100, which serves as a relay node, performs reception determination in cooperation with policy server 200 serving as a bandwidth control mechanism within LAN 20 which is a private network. When permitting the reception, the VPN gateway 100 provides a communication line to the mobile terminal 80 or a pre-shared key is dynamically generated between a radio base station and radio network controller 70, and the pre-shared key is notified to the VPN gateway 100 by the radio network controller 70.

## Description

### Technical Field

The present invention relates to a mobile communication system which is constituted by a radio network controller and a radio base station connected to the radio network controller and which provides a mobile communication service to a mobile terminal connectable to the radio base station and particularly, to a mobile communication system which uses a private network to provide a mobile communication service to a user within an indoor environment. Further, the present invention relates to: a relay node and radio network controller used in the mobile communication system; a program that realizes functions of the mobile communication system, relay node, and radio network controller; and a mobile communication method.

### Background Art

Since it is difficult for radio waves to reach indoors such as a location inside a building, users who use his or her mobile terminals indoors cannot receive a stable mobile communication service. In order to provide a stable mobile communication service to indoor users, an indoor mobile communication system for covering indoor areas needs to be introduced. In Third Generation (3G) service using 2 GHz band, in particular, radio wave propagation characteristics are inferior to those in Second Generation (2G) service and, therefore, dead zone easily appears in indoor areas.

In order to extend coverage of the 3G service to indoor areas to the level equivalent to the 2G service under the circumstance, a large number of indoor communication systems need to be introduced. However, this involves a large number of mobile communication operators and, therefore, it is difficult to realize such a countermeasure in terms of cost. In this situation, a lower cost indoor communication system is now required.

Third Generation Partnership Project (3GPP), which is an international organization for the standardization of Universal Mobile Telecommunications System (UMTS), has specified Release 5 in which an IP transport option that allows a radio network controller (RNC) and a radio base station to be connected to each other via an IP network is provided. This makes it possible to assume a configuration, as one of approaches to an indoor communication system using the IP transport, in which a public Internet connection or closed-area IP network are used for outdoor access and a private network (for example, a network built by a company for its own exclusive use) is used for an indoor access. This configuration can significantly reduce channel construction cost as well as introduction coast of an indoor communication system.

In such a mobile communication system using a private network, the following new functions are required.
(1) Bandwidth control for mobile communication traffic in private network.
(2) Realization of communication between radio network controller and radio base station across firewall/Network Address Port Translation (NAPT) within private network.
(3) Assurance of security in mobile communication traffic.
(4) Maintenance of IP address system that mobile communication operator has uniquely assigned to a mobile communication node.

With regard to the function (1), a centralized bandwidth control method using a policy server is popularly practiced as a bandwidth control method for a private network. In this method, a policy server previously distributes bandwidth control information including traffic information for packet identification and bandwidth control rules to LAN devices such as routers or Ethernet (registered trademark) switch. Then, a LAN device located at the edge of the private network performs packet identification based on the traffic information using the IP header and L4 header of a packet received from the end host or the Internet to add a mark corresponding to corresponding bandwidth control information to the packet and transfers the packet to a LAN device at the next hop. LAN devices that are not located at the edge of the private network perform bandwidth control for every packet based on the mark added by the LAN device at the edge and bandwidth control information distributed from the policy server.

The functions (2) to (4) can be realized by using, for example, an IPsec-based Virtual Private Network (VPN) technology. More specifically, a VPN gateway is installed outside the controlled area of the private network, communication between the radio network controller and radio base station is always performed via the VPN gateway, and an encrypted communication technology using IPsec is applied between the radio network controller and VPN gateway and between the radio network controller and radio base station.

As a conventional mobile communication system, a technique for performing communication between a radio terminal device and wired terminal device while maintaining adequate security is disclosed in Patent Document 1.

A technique related to a method of establishing a virtual private network in a conventional mobile data communication system is disclosed in Patent Document 2.
Patent Document 1: JP-A 2001-333110
Patent Document 2: JP-A 10-032610

### Disclosure of Invention

### Problems to be Solved by the Invention

In the case where mobile communication traffic occupies the majority of the bandwidth of the private network in the above bandwidth control method, the private network channel may be congested to degrade communication quality of the mobile communication traffic between the radio network controller and radio base station or to adversely affect traffic within other private network.

Further, in the abovementioned VPN technology, when a plurality of radio network controllers and radio base stations exist, it is necessary to previously set in the VPN gateway routing information (path control information) between the radio network controller and radio base station and a pre-shared key needed to establish IPsec Security Association (SA) between the radio network controller and VPN gateway and between the radio base station and VPN gateway without utilizing a third-party authentication. Therefore, as the number of radio base stations to be installed is increased, operation for introducing an indoor communication system becomes more troublesome.

An object of the present invention is to provide a mobile communication system, which provides a mobile communication service using a private network, capable of preventing private network channels from being congested due to an increase of mobile communication traffic to prevent other traffic from being adversely affected.

Another object of the present invention is to provide a mobile communication system capable of simplifying operation for introducing an indoor communication system even when the number of radio base stations to be installed is increased.

### Means for Solving the Problems

According to a first aspect of the present invention, there is provided a mobile communication system which includes a radio network controller and a radio base station connected to the radio network controller and which provides a mobile communication service to a mobile terminal connectable to the radio base station, characterized in that
the radio base station is installed within a private network, a relay node installed in the private network relays mobile communication traffic transmitted on the private network between the radio network controller and radio base station, and when the mobile terminal makes or receives a call, the relay node performs reception determination processing in cooperation with bandwidth control for the private network and provides a communication link to the mobile terminal when authenticating the reception.

According to a second aspect of the present invention, there is provided a mobile communication system which includes a radio network controller and a radio base station connected to the radio network controller and which provides a mobile communication service to a mobile terminal connectable to the radio base station, characterized in that
the radio base station is installed within a private network, a relay node installed in the private network relays mobile communication traffic transmitted on the private network between the radio network controller and radio base station, first and second encryption keys are used, respectively, between the radio network controller and relay node and between the radio base station and relay node to perform encrypted communication, and a pre-shared key needed to generate the second encryption key is generated by a key exchange mechanism between the radio network controller and radio base station, the generated pre-shared key being notified from the radio network controller to the relay node.

According to a third aspect of the present invention, there is provided a mobile communication system which includes a radio network controller and a radio base station connected to the radio network controller and which provides a mobile communication service to a mobile terminal connectable to the radio base station, characterized in that
the radio base station is installed within a private network, mobile communication traffic between a relay node which is connected to the radio base station via the private network and radio base station is transmitted on the private network, the relay node relays the mobile communication traffic transmitted on the private network between the radio network controller and radio base station, first and second encryption keys are used, respectively, between the radio network controller and relay node and between the radio base station and relay node to perform encrypted communication, and the second encryption key is dynamically generated by a key exchange mechanism between the radio network controller and radio base station, the generated second encryption key being notified from the radio network controller to the relay node.

The relay node and radio network controller according to the present invention are used in the mobile communication system. The program according to the present invention realizes the functions of the relay node and radio network controller according to the present invention. Further, a mobile communication method according to the present invention is applied to the mobile communication system.

### Effect of the Invention

A first advantage of the present invention is, in providing a mobile communication service using a private network as a line between a radio base station and a radio network controller, to prevent the private network from being congested due to an increase of mobile communication traffic to thereby prevent other traffic from being adversely affected. This advantage is made as follows: a relay node receives mobile communication traffic, which is transmitted on the private network, between the radio network controller and radio base station, performs reception determination processing in cooperation with a bandwidth management function within the private network, and provides a communication line to a mobile terminal when permitting the reception.

A second advantage of the present invention is to simplify operation for introducing an indoor communication system. This advantage is made as follows: a pre shared-key needed to generate an encryption key is generated using a key exchange mechanism between the radio network controller and radio base station; the radio network controller notifies the relay node of the generated pre-shared key; the relay node uses the notified pre-shared key to generate the encryption key between itself and radio base station; and encrypted communication is performed; or as follows: an encryption key is dynamically generated using a key exchange mechanism between the radio network controller and radio base station; the radio network controller notifies the relay node of the generated encryption key; and the relay node uses the notified encryption key to perform encrypted communication.

### Best Mode for Carrying Out the Invention

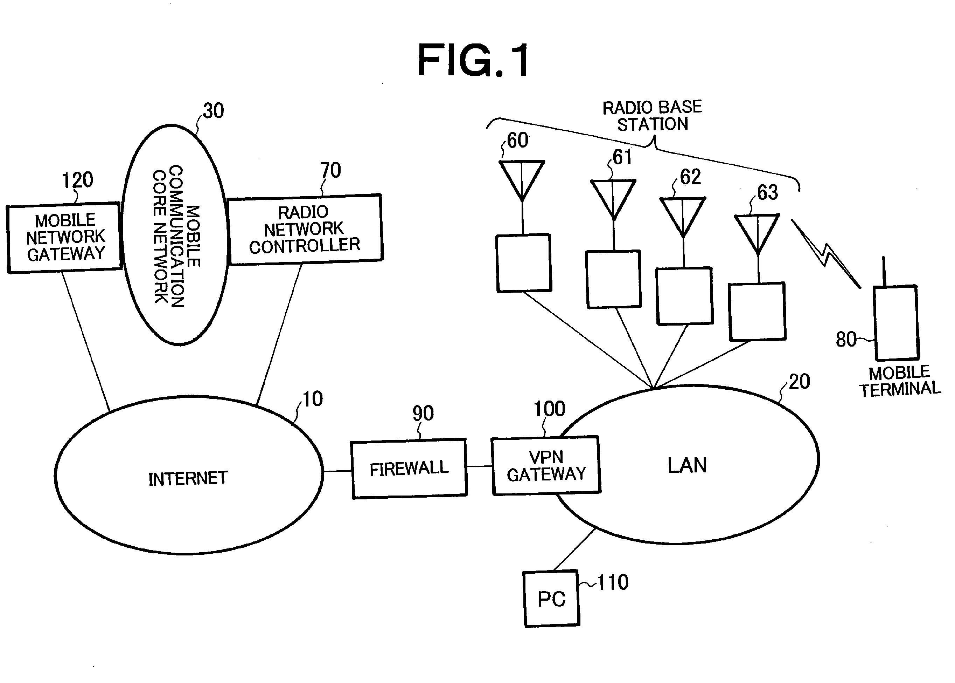

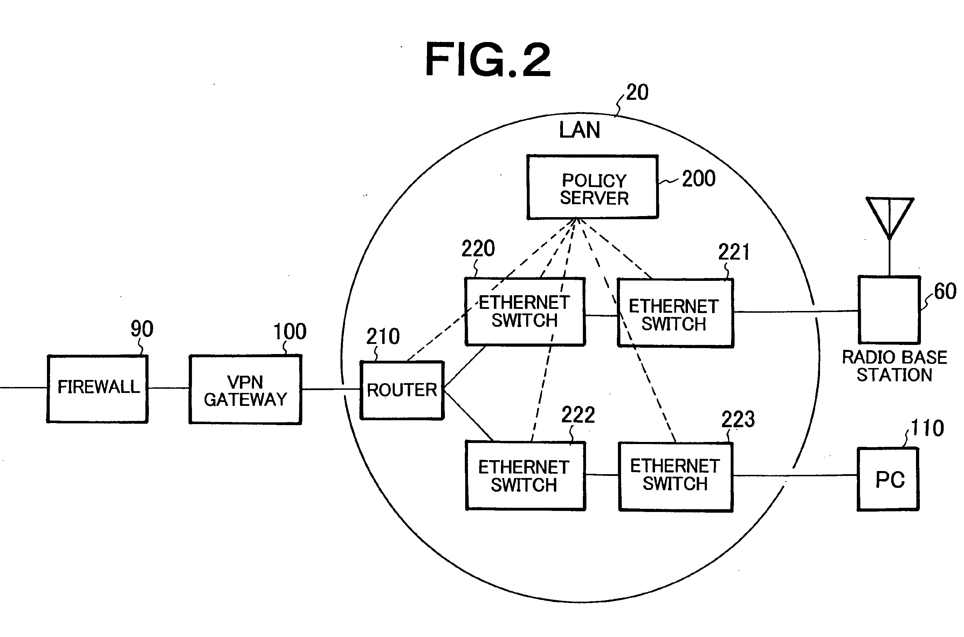

A mobile communication system according to a first embodiment of the present invention will be described with reference to network configuration diagrams shown in FIGS. 1 and 2. A LAN 20, which is a private network to which a personal computer (PC) 110 and the like are connected, is constituted by Ethernet (registered trademark) and is connected to the Internet 10 via a firewall 90 and a Virtual Private Network (VPN) gateway 100 serving as a relay node. A mobile communication core network 30 is connected to the Internet 10 via a radio network controller 70 and a mobile network gateway 120.

Radio base stations 60 to 63 are connected to the LAN 20 which is a private network (for example, a network built by a company for its own exclusive use). In this case, the Internet 10 and LAN 20 are used as channels for communication between the radio network controller 70 and respective radio base stations 60 to 63. Further, intervention of the VPN gateway 100 allows the communication between the radio network controller 70 and respective radio base stations 60 to 63 to be established across the firewall 90. In the above configuration, a mobile communication operator provides a data communication service such as Internet access to a mobile terminal 80.

The LAN 20 is operated using private addresses and the Internet 10 is operated using global addresses. In communication between the radio network controller 70 and respective radio base stations 60 to 63, IPsec Encapsulation Security Payload (ESP) tunnel mode is utilized in order to assure security; a global IP address is set in the outer IP header within the Internet 10 and a private IP address is set in the LAN 20; and an IP address (hereinafter, referred to as operator's uniquely assigned address) that an operator has uniquely assigned to the radio network controller 70 and respective radio base stations 60 to 63 is set in the inner IP header.

The LAN 20 has the configuration as shown in FIG. 2. As shown in FIG. 2, the LAN 20 includes a router 210 and a plurality of Ethernet (registered trademark) switches 220 to 223. The radio base station 60 and PC 110 are connected respectively to the Ethernet (registered trademark) switches 221 and 223 (hereinafter, for simplification, the router 210 and Ethernet (registered trademark) switches 220 to 223 are collectively referred to as LAN device). The LAN 20 performs bandwidth control. In the first embodiment, centralized bandwidth control is performed by a policy server 200 having a bandwidth management function. In this case, traffic information describing the characteristics of given traffic and bandwidth control information needed to perform bandwidth control for the traffic are previously set in the policy server 200. When detecting the start-up of the LAN device, the policy server 200 uses a Common Open Policy Service (COPS) protocol to distribute the traffic information and bandwidth control information to the LAN device. The respective LAN devices then perform bandwidth control for received packets based on the notified bandwidth control information.

Each of the LAN devices reports a bandwidth control state to the policy server 200 by using a Simple Network Management Protocol (SNMP) and, based on the report, the policy server 200 collectively manages the entire bandwidth control state of the LAN 20. The same bandwidth control is performed for mobile communication traffic flowing in the LAN 20. There are two types of mobile communication traffic: signaling data and user data. Bandwidth control for the signaling data traffic is performed using a method as described below. Traffic information related to the signaling data and bandwidth control information are previously set in the policy server 200, and the policy server 200 distributes the above information to the respective LAN devices. Based on the received information, each of the LAN devices performs bandwidth control for the signaling data traffic. Further, bandwidth control for the user data is performed using a method as described below.

When the mobile terminal 80 makes or receives a call, the radio network controller 70 transmits a QoS signaling to the VPN gateway 100. Upon receiving the QoS signaling, the VPN gateway 100 extracts the traffic information related to the user data from the QoS signaling and notifies the policy server 200 of the traffic information. The policy server 200 then determines whether the bandwidth specified in the traffic information is allowable or not. When determining the bandwidth is allowable, the policy server 200 distributes the bandwidth information and traffic information to LAN devices located on the mobile communication traffic path or to all LAN devices. The LAN devices located on the mobile communication traffic path then perform bandwidth control for the user data traffic based on the distributed information.

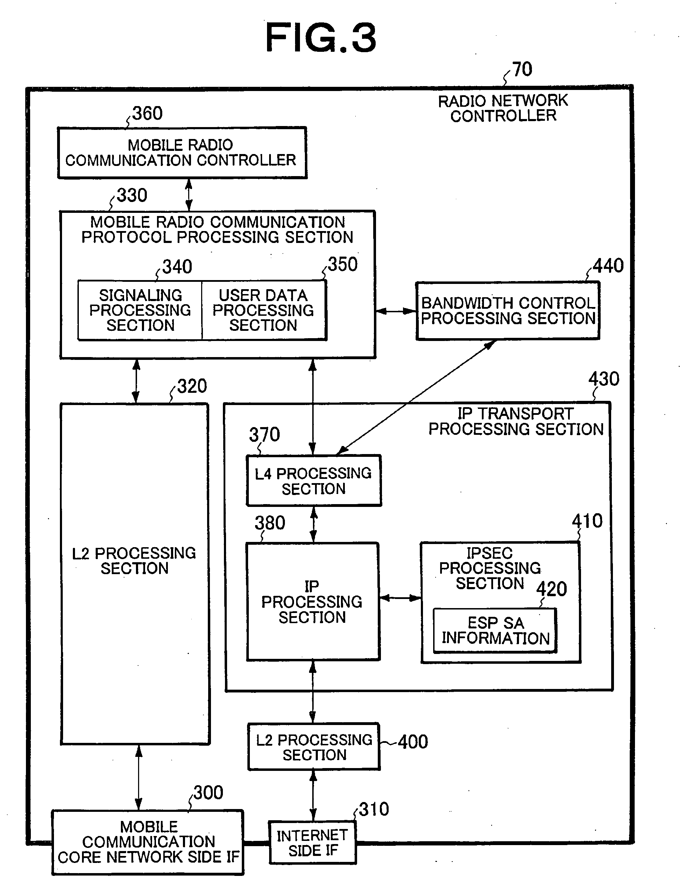

Configurations of the radio network controller 70, radio base stations 60 to 63, VPN gateway 100, and policy server 200 that constitute the mobile communication system according to the first embodiment of the present invention will next be described with reference to FIGS. 3 to 6.

The radio network controller 70 has the configuration as shown in FIG. 3. More specifically, the radio network controller 70 includes two interfaces: a mobile communication core network side interface (IF) 300 and an Internet side interface (IF) 310. Further, the radio network controller 70 includes a L2 processing sections 320 and 410, an IP transport processing section 430, a mobile radio communication protocol processing section 330, a mobile radio communication controller 360, and a bandwidth control processing section 440. The mobile radio communication protocol processing section 330 includes a signaling processing section 340 and a user data processing section 350. The IP transport processing section 440 includes an IP processing section 380, a L4 processing section 370, and an IPsec processing section 410. The IPsec processing section 410 retains Encryption Security Payload (ESP) Security Association (SA) information 420. Basic processing performed in the above components will be described below.

Signaling data and user data received via the mobile communication core network side IF 300 are subjected to link processing by the L2 processing section 320. Signaling data and user data received via the Internet side IF 310 are subjected to predetermined processing in the L2 processing section 400, IP processing section 380, and L4 processing section 370. After that, the signaling data and user data thus processed are subjected to predetermined processing in the mobile radio communication protocol processing section 330 under the control of the mobile radio communication controller 360.

The mobile radio communication protocol processing section 330 transmits a packet via the Internet side IF 310 in the following procedure.

Firstly, the L4 processing section 370 applies Stream Control Transmission Protocol (SCTP) processing to the signaling data and User Datagram Protocol (UDP) processing to the user data. Then, the IP processing section 380 adds to the packet an inner IP header in which the operator's uniquely assigned IP address of the destination radio base station 60 is set as the transmission destination and operator's uniquely assigned IP address of the radio network controller 70 itself is set as the transmission source. The packet is then encapsulated with an outer IP header in which the global IP address of its own is set as the transmission source and global IP address of the VPN gateway 100 is set to the transmission destination. In the case where the SA information of the destination radio base station 60 is included in the ESP SA information 420, the IPsec processing section 410 encrypts the packet and adds an ESP header and ESP trailer thereto.

When the packet is encrypted, a L4 header in the packet is copied and added to the front of the ESP header so as to be viewed by the LAN devices in the LAN 20. This is because that the L4 header is needed for the LAN devices to identify the packet.

After being subjected to link processing in the L2 processing section 400, the packet is transmitted via the Internet side IF 310. The reverse processing is performed at the packet reception time. In the case where the ESP header and ESP trailer are included in the reception packet, the IPsec processing section 410 decrypts the packet. When the decoding processing has not been performed correctly, the packet is discarded.

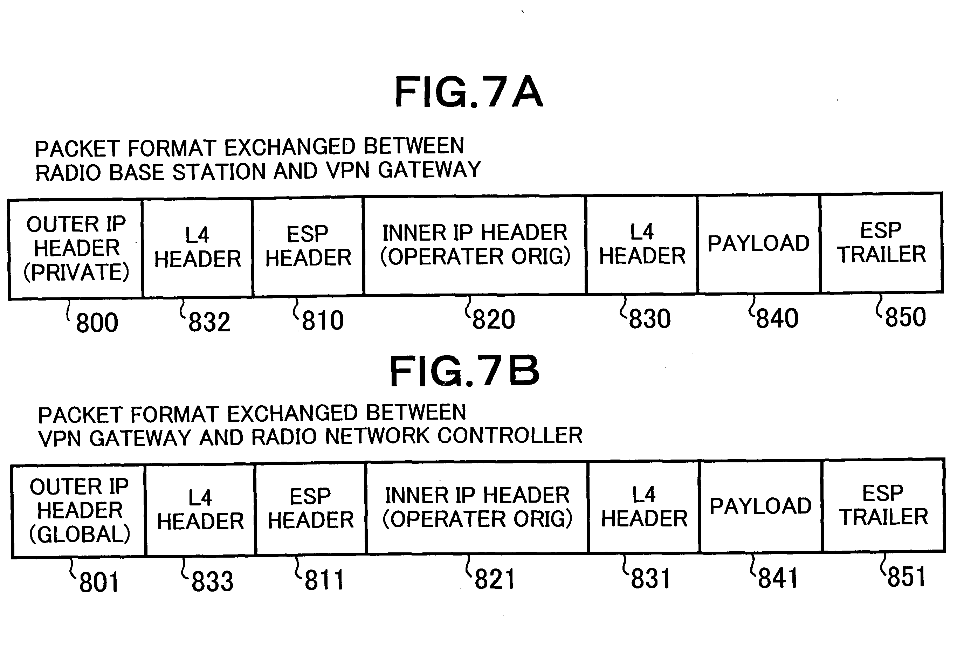

The format of a packet that the IP transport processing section 430 transmits or receives is as shown in FIG. 7B. As shown in FIG. 7B, the packet includes an outer IP header 801, a L4 header 833, an ESP header 811, an inner IP header 821, a L4 header 831, a payload 841, and an ESP trailer 851.

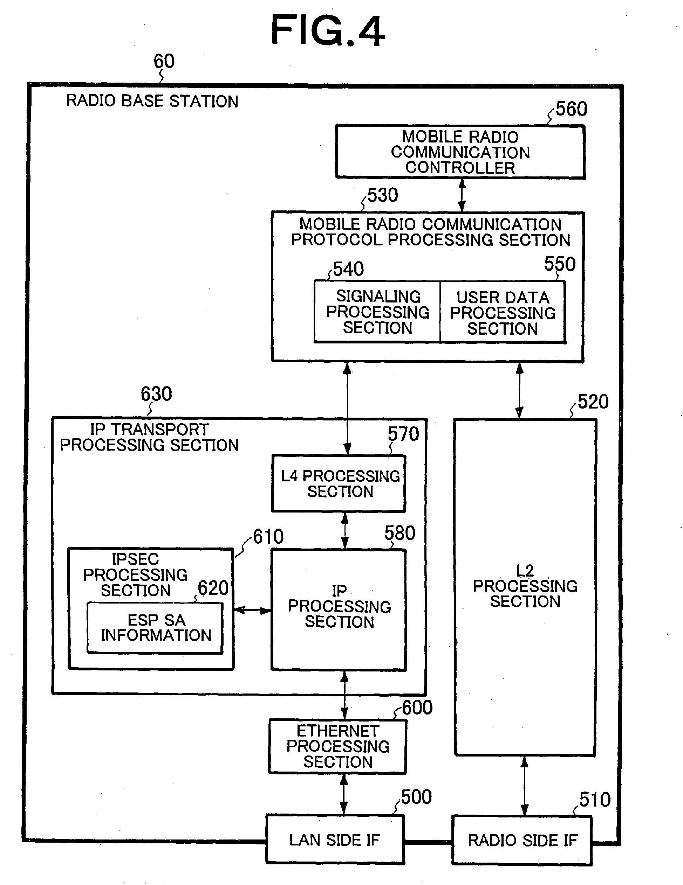

The radio base station 60 shown in FIG. 1 has the configuration as shown in FIG. 4. While the radio base station 60 is shown here, the radio base stations 61 to 63 have the same configuration as that of the radio base station 60.

More specifically, the radio base station 60 has two interfaces: a LAN side IF 500 and a radio side IF 510. Further, the radio base station 60 includes a L2 processing section 520, a mobile radio communication protocol processing section 530, a mobile radio communication controller 560, an IP transport processing section 630, and an Ethernet (registered trademark) processing section 600. The mobile radio communication protocol processing section 530 includes a signaling processing section 540 and a user data processing section 550. The IP transport processing section 630 includes a L4 processing section 570, an IP processing section 580, and an IPsec processing section 610.

The IPsec processing section 610 retains ESP SA information 620. Basic processing performed in the above components will be described below.

Signaling data and user data received via the radio side IF 510 are subjected to link processing by the L2 processing section 520. Signaling data and user data received via the LAN side IF 500 are subjected to predetermined processing in the Ethernet (registered trademark) processing section 600, IP processing section 580, and L4 processing section 570. After that, the signaling data and user data thus processed are subjected to predetermined processing in the mobile radio communication protocol processing section 530 under the control of the mobile radio communication controller 560.

The mobile radio communication protocol processing section 530 transmits a packet via the LAN side IF 500 in the following procedure.

Firstly, the L4 processing section 570 applies SCTP processing to the signaling data and UDP processing to the user data. Then, the IP processing section 580 adds to the packet an inner IP header in which the operator's uniquely assigned IP address of the destination radio network controller 70 is set as the transmission destination and operator's uniquely assigned IP address of the radio base station 60 itself is set as the transmission source. The packet is then encapsulated with an outer IP header in which the private IP address of its own is set as the transmission source and private IP address of the VPN gateway 100 is set as the transmission destination.

In the case where the SA information of the destination radio base station 60 is included in the ESP SA information 620, the IPsec processing section 610 encrypts the packet and adds an ESP header and ESP trailer thereto. When the packet is encrypted, an L4 header is copied and added to the front of the ESP header.

After being subjected to link processing in the Ethernet (registered trademark) processing section 600, the packet is transmitted via the LAN side IF 500. The reverse processing is performed at the packet reception time. In the case where the ESP header and ESP trailer are included in the reception packet, the IPsec processing section 610 decrypts the packet. When the decoding processing has not been performed correctly, the packet is discarded.

The format of a packet that the IP transport processing section 630 transmits or receives is as shown in FIG. 7A. As shown in FIG. 7A, the packet includes an outer IP header 800, a L4 header 832, an ESP header 810, an inner IP header 820, a L4 header 830, a payload 840, and an ESP trailer 850.

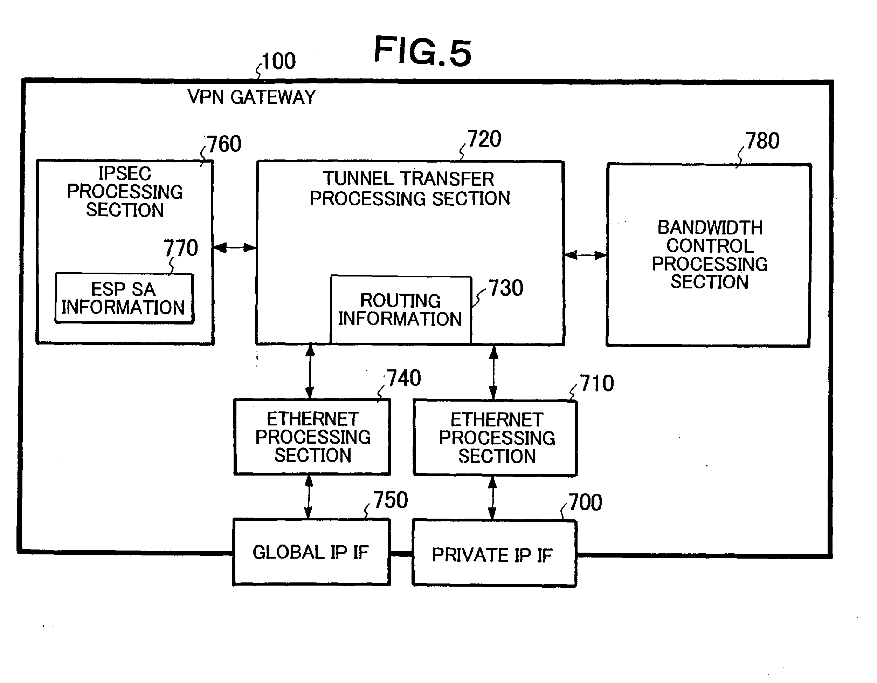

The VPN gateway 100 shown in FIG. 1 has the configuration as shown in FIG. 5.

More specifically, the VPN gateway 100 includes a Global IP IF 750, a Private IP IF 700, Ethernet (registered trademark) processing sections 710 and 740, a tunnel transfer processing section 720, an IPsec processing section 760, and a bandwidth control processing section 780. The tunnel transfer processing section 720 retains routing information 730. The IPsec processing section 760 retains ESP SA information 770.

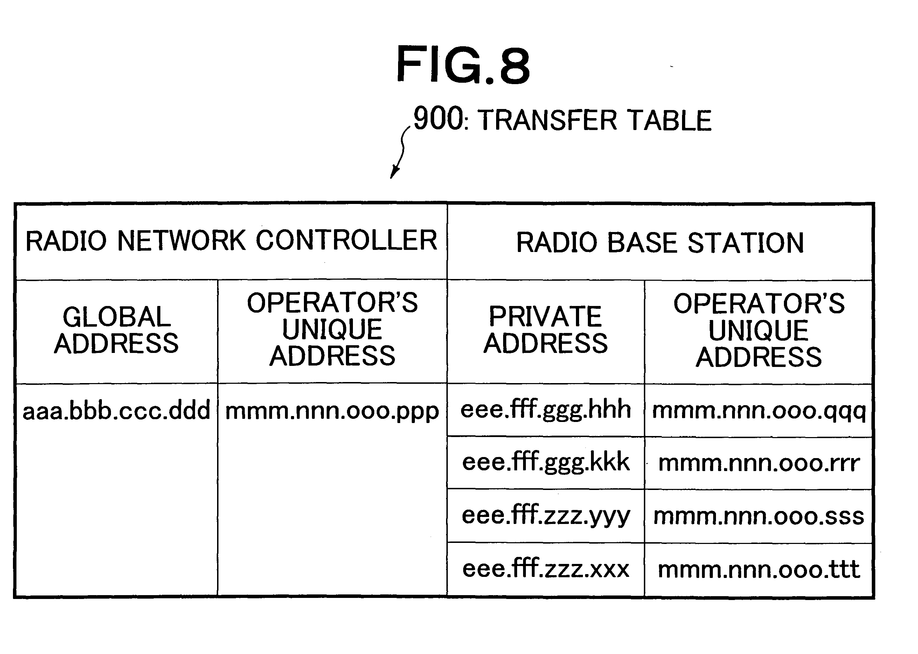

Operation of the VPN gateway 100 that constitutes the mobile communication system according to the first embodiment of the present invention will be described below in detail with reference to FIGS. 8 to 14. The routing information 730 is.represented by a transfer table 900 as shown in FIG. 8. In this example, the global address and operator's uniquely assigned address for one radio network controller and the private address and operator's uniquely assigned address for four radio base stations are registered in the transfer table 900.

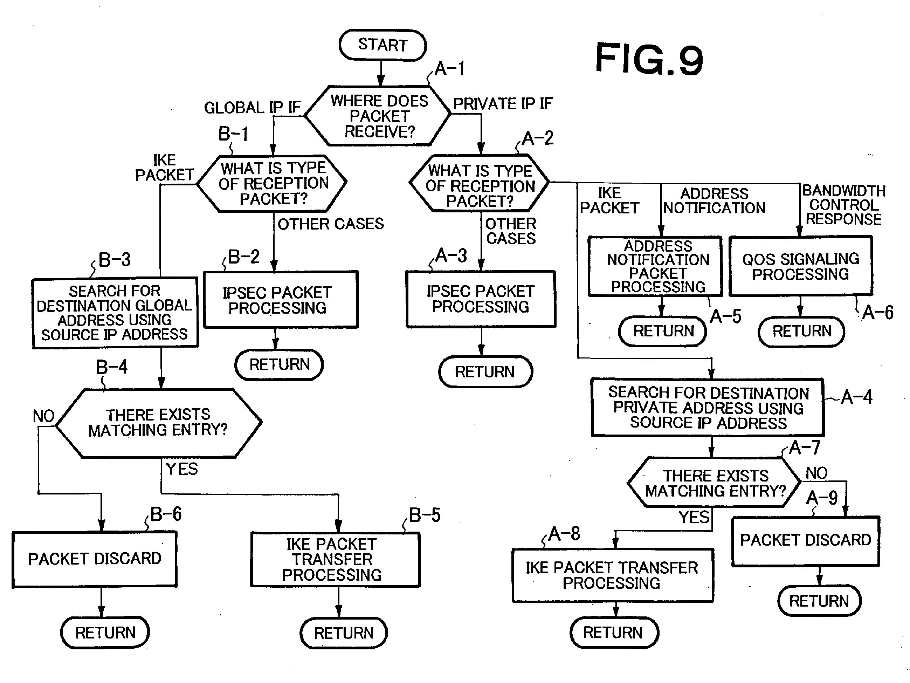

FIG. 9 shows the entire process flow of the VPN gateway 100.

The VPN gateway 100 determines whether the source IP address in the outer IP header of the received packet is a global address or private address (step A-1). When determining that the source IP address is a private address, the VPN gateway 100 then identifies the type of the received packet (step A-2).

When determining that the received packet is a bandwidth control response, the VPN gateway 100 performs QoS signaling processing (step A-6). When determing that the received packet is an address notification, the VPN gateway 100 performs address notification packet processing (step A-5). Details of these processing are described later.

When determining that the received packet is an IKE packet, the VPN gateway 100 searches the list of private addresses in the transfer table 900 by using the source IP address of the packet (step A-4). In the cases other than the above, the VPN gateway 100 performs IPsec packet processing to be described later (step A-3).

The VPN gateway 100 determines whether a matching entry in the step A-4 exists or not (step A-7). When determing the matching entry exists, the VPN gateway 100 performs IKE packet transfer processing to be described later (step A-8). When determing that the matching entry does not exist, the VPN gateway 100 discards the received packet (step A-9).

On the other hand, when determining, in the step A-1, that the source IP address in the outer IP header is a global address, the VPN gateway 100 then identifies the type of the received packet (step B-1). When determining that the received packet is an IKE packet, the VPN gateway 100 searches the list of global addresses in the transfer table 900 by using the source IP address of the packet (step B-3) and determines whether a matching entry exists or not (step B-4).

In the case where the received packet is a packet other than the IKE packet, the VPN gateway 100 performs IPsec packet processing to be described later (step B-2).

When determing, in the step B-4, that a matching entry exists, the VPN gateway 100 performs IKE packet transfer processing to be described later (step B-5). When determing that a matching entry does not exist, the VPN gateway 100 discards the received packet (step B-6).

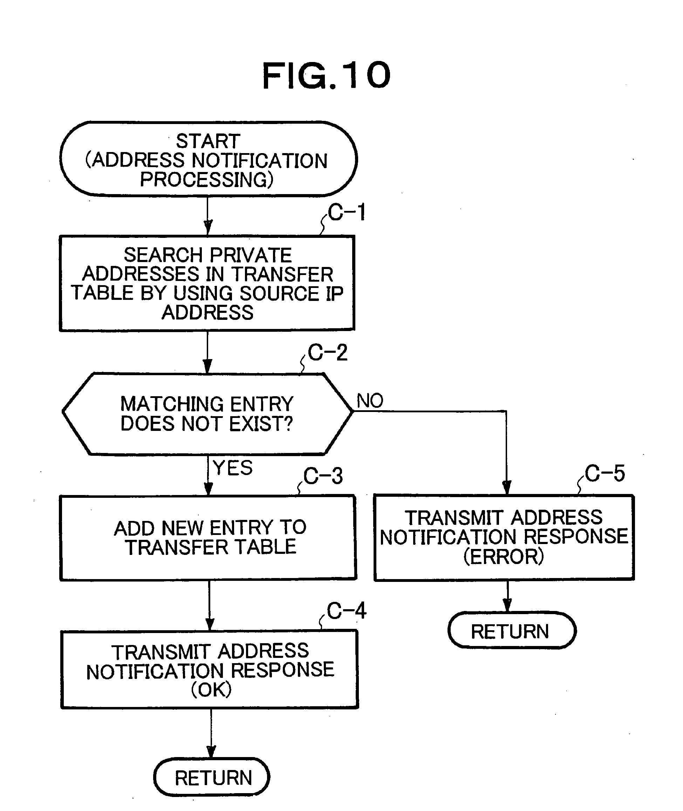

FIG. 10 shows a flow of the address notification packet processing performed in the step A-5 of FIG. 9. In this case, the VPN gateway 100 searches the list of private addresses in the transfer table 900 by using the source IP address of the packet (step C-1) and determines whether a matching entry exists or not (step C-2).

When determining that the matching entry does not exist, the VPN gateway 100 adds a new entry to the transfer 900 (step C-3) and transmits an address notification response indicating that the processing has normally been completed (step C-4). When determing that the matching entry exists, the VPN gateway 100 returns an address notification response including an error message (step C-5).

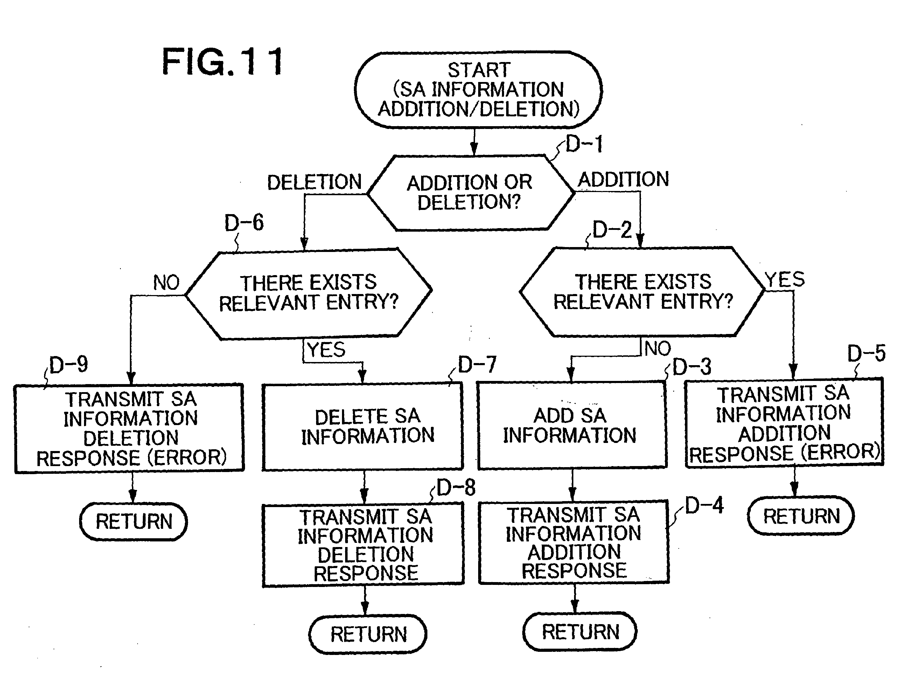

FIG. 11 shows a flow of SA information addition/deletion processing performed by the VPN gateway 100. In this processing, the VPN gateway 100 firstly determines whether a request is an addition request or deletion request (step D-1).

When determining that a request is an addition request, the VPN gateway 100 checks whether there is an entry whose IP address, IPsec protocol type, and Security Parameter Index (SPI) are the same as those in a message of the request (step D-2). When determining that there is no entry that matches the above condition, the VPN gateway 100 adds a new entry related to SA information (step D-3) and returns a SA information addition response (step D-4). When determining, in step D-2, that there exists an entry that matches the above condition, the VPN gateway 100 returns a SA information addition response (error) (step D-5).

When determining that a request is a deletion request, the VPN gateway 100 checks whether there is an entry whose IP address, IPsec protocol type, and SPI are the same as those in a message of the request as in the case of the addition processing (step D-6). When determining that there exists an entry that matches the above condition, the VPN gateway 100 deletes a new entry related to SA information (step D-7) and returns a SA information deletion response (step D-8). When determining, in step D-6, that there is no entry that matches the above condition, the VPN gateway 100 returns a SA information deletion response (error) (step D-9).

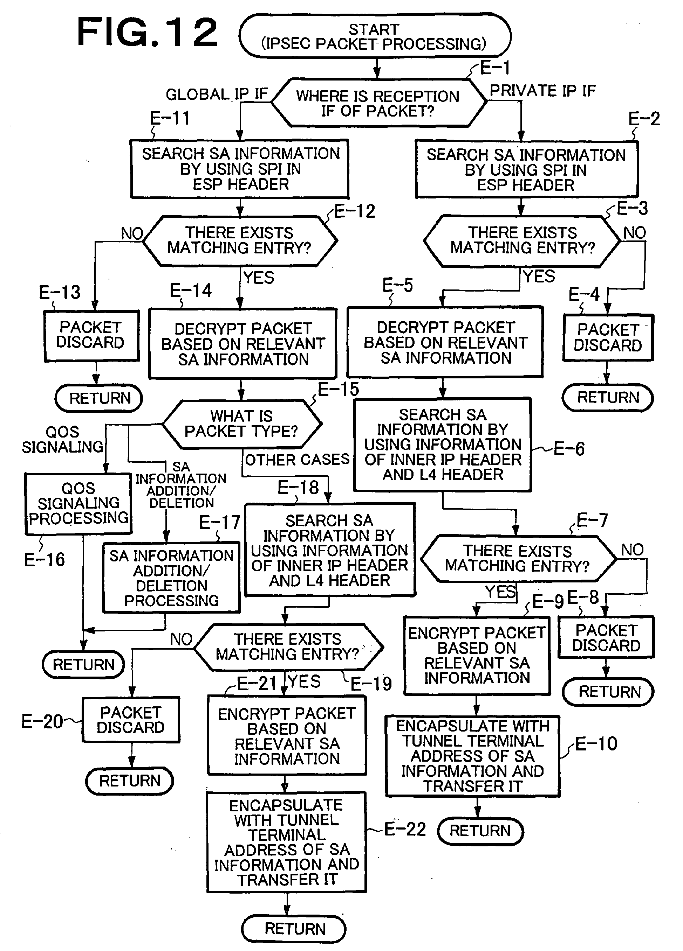

FIG. 12 shows a flow of the IPsec packet processing performed by the VPN gateway 100 in the steps A-3 and B-2 of FIG. 9.

In this processing, the VPN gateway 100 firstly specifies the interface (IF) via which it has received a packet (step E-1).

When determining that a packet has been received via the private IP IF, the VPN gateway 100 searches list of SA information by using the SPI in the ESP header to determine whether there exists a matching entry (steps E-2, E-3).

When determining that there is no matching entry, the VPN gateway 100 discards the packet (step E-4). When determing that there exits a matching entry, the VPN gateway 100 decrypts the packet by using an encryption key corresponding to the matching SA information (step E-5) and searches entries corresponding to SA information by using information of the inner IP header and L4 header to determine whether there exists a matching entry (step E-6, E-7). When determining that there is no matching entry, the VPN gateway 100 discards the packet (step E-8).

When determining that there exists a matching entry, the VPN gateway 100 encrypts the packet using an encryption key corresponding to the matching SA information (step E-9). The VPN gateway 100 then replaces the IP header with an IP header in which the tunnel terminal IP address of the SA information is set as the destination and encapsulates the packet so as to transfer it (step E-10).

On the other hand, when determining that a packet has been received via the global IP IF, the VPN gateway 100 searches SA information by using the SPI in the ESP header to determine whether there exists a matching entry (steps E-11, E-12).

When determining that there is no matching entry, the VPN gateway 100 discards the packet (step E-13). When determing that there exits a matching entry, the VPN gateway 100 decrypts the packet using an encryption key corresponding to the matching SA information (step E-14) and checks the type of the packet (step E-15).

When determining that the packet is a QoS signaling packet, the VPN gateway 100 performs QoS signaling processing to be described later (step E-16). When the packet is a SA information addition/deletion request packet, the VPN gateway 100 performs the SA information addition/deletion processing shown in FIG. 11 (step E-17).

In the case where the type of the packet is other than the above in the step E-15, the VPN gateway 100 searches entries corresponding to SA information by using information of the inner IP header and L4 header to determine whether there exists a matching entry (steps E-18, E-19).

When determining that there is no matching entry, the VPN gateway 100 discards the packet (step E-20). When determing that there exists a matching entry, the VPN gateway 100 encrypts the packet by using an encryption key corresponding to the matching SA information (step E-21). The VPN gateway 100 then replaces the IP header with an outer IP header in which the tunnel terminal IP address of the SA information is set as the destination and encapsulates the packet so as to transfer it (step E-22).

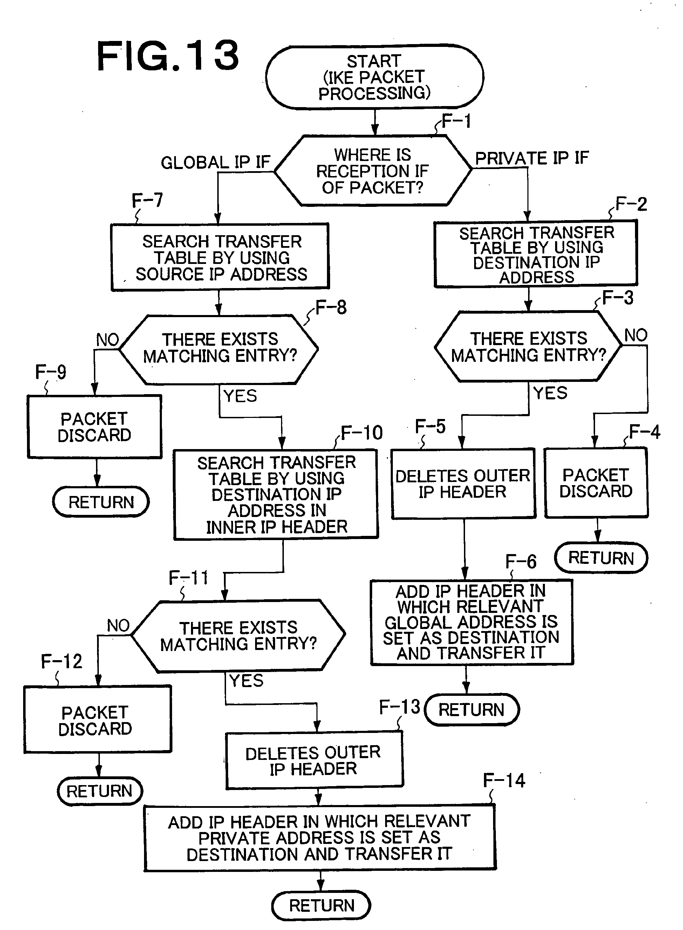

FIG. 13 shows a flow of the IKE packet transfer processing performed by the VPN gateway 100 in the steps A-8 and B-5 of FIG. 9.

In this processing, the VPN gateway 100 firstly specifies the interface (IF) via which it has received a packet (step F-1) .

When determining that a reception IF has been the private IP IF, the VPN gateway 100 searches the list of private addresses in the transfer table 900 by using the source IP address to determine whether there exists a matching entry (steps F-2, F-3).

When determining that there is no matching entry, the VPN gateway 100 discards the packet (step F-4).

When determining that there exits a matching entry, the VPN gateway 100 deletes the outer IP header of the packet (step F-5). The VPN gateway 100 then adds an IP header in which the global address specified in the matching entry is set as the destination and encapsulates the packet so as to transfer it (step F-6).

On the other hand, when determining that a reception IF has been the global IP IF in the step F-1, the VPN gateway 100 searches the list of global addresses in the transfer table 900 by using the source IP address to determine whether there exists a matching entry (steps F-7, F-8).

When determining that there is no matching entry, the VPN gateway 100 discards the packet (step F-9). When determing that there exits a matching entry, the VPN gateway 100 searches the list of operator's uniquely assigned address of the radio base station in the transfer table 900 by using the destination IP address in the inner IP header to determine whether there exists a matching entry (steps F-10, F-11).

When determining that there is no matching entry, the VPN gateway 100 discards the packet (step F-12). When determing that there exits a matching entry, the VPN gateway 100 deletes the outer IP header of the packet (step F-13). The VPN gateway 100 then adds an IP header in which the private address specified in the matching entry is set as the destination and encapsulates the packet so as to transfer it (step F-14).

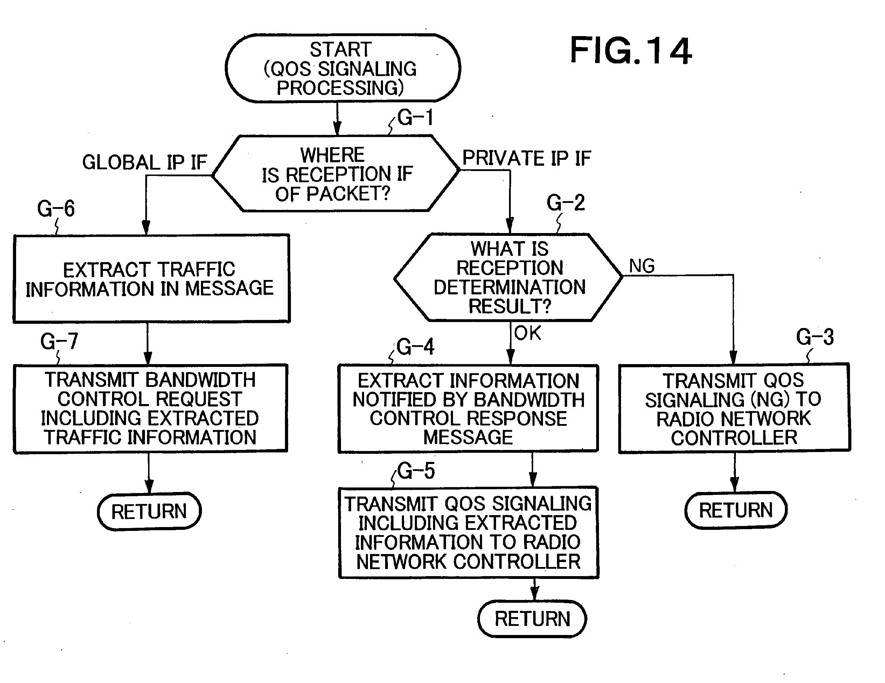

FIG. 14 shows an operation flow of the QoS signaling performed by the VPN gateway 100 in the step A-6 of FIG. 9.

In this processing, the VPN gateway 100 firstly specifies the IF via which it has received a packet (step G-1).

When determining that a reception IF has been the private IP IF, the VPN gateway 100 checks a reception determination result in a received bandwidth control response (COPS Decision) message (step G-2).

When the determination result is "NG" (failed), the VPN gateway 100 generates a QoS signaling including the determination result and traffic information and transmits it to the radio network controller 70 (step G-3).

When the determination result is "OK", the VPN gateway 100 extracts traffic information and bandwidth control information notified by the bandwidth control response message (step G-4) and transmits a QoS signaling including the extracted various information to the radio network controller 70 (step G-5).

On the other hand, when determining, in the step G-1, that a reception IF has been the global IP IF, the VPN gateway 100 extracts traffic information in the QoS signaling (step G-6), generates a bandwidth control request (COPS Request) message including the traffic information, and transmits it to the policy server 200 (step G-7).

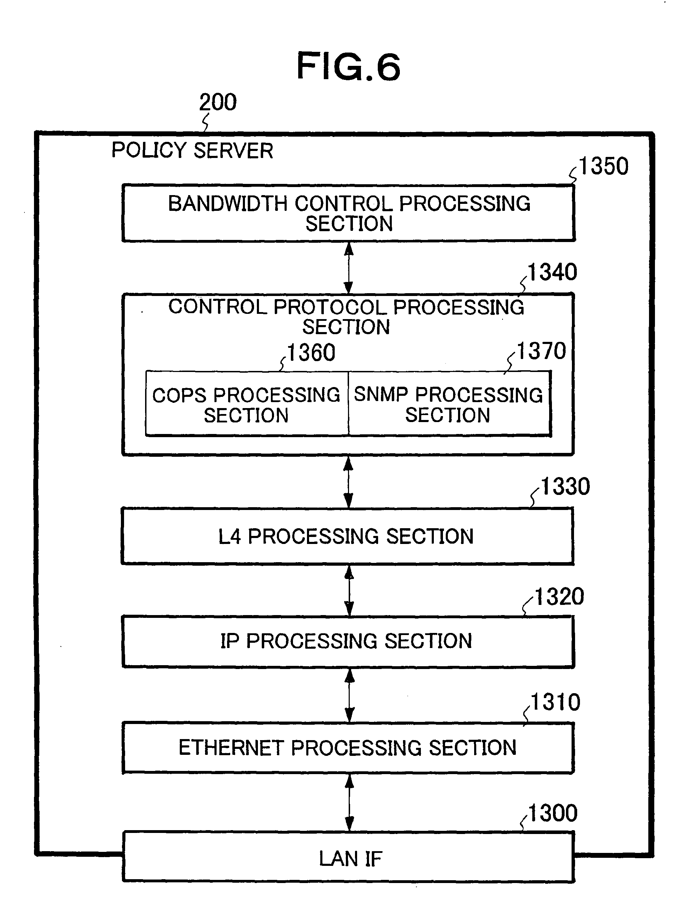

The policy server 200 has the configuration as shown in FIG. 6. More specifically, the policy server 200 includes a LAN IF 1300, an Ethernet (registered trademark) processing section 1310, an IP processing section 1320, a L4 processing section 1330, a control protocol processing section 1340, and a bandwidth control processing section 1350. The control protocol processing section 1340 includes a COPS processing section 1360 and an SNMP processing section 1370. Basic processing performed in the above components will be described below.

The SNMP processing section 1370 receives an SNMP message from a LAN device in the LAN 20 via the LAN IF 1300, Ethernet (registered trademark) processing section 1310, IP processing section 1320, and L4 processing section 1330, extracts bandwidth control state information in the message, and notifies the bandwidth control processing section 1350 of the information.

The bandwidth control processing section 1350 collects and manages the notified information to collectively manage a bandwidth control state in the LAN 20.

The COPS processing section 1360 receives an instruction from the bandwidth control processing section 1350 to notify a LAN device of bandwidth control information and traffic information on a COP Decision message.

A bandwidth control request message transmitted from the VPN gateway 100 is transferred to the COPS processing section 1360 via the LAN IF 1300, Ethernet (registered trademark) processing section 1310, IP processing section 1320, and L4 processing section 1330. The COPS processing section 1360 extracts traffic information and bandwidth control information in a bandwidth control request message and notifies the bandwidth control processing section 1350 of the information.

Upon receiving the information, the bandwidth control processing section 1350 makes a reception determination based on the collected bandwidth control information and notifies the COPS processing section 1360 of a determination result together with permitted bandwidth control information. When the determination result is "OK", the COPS processing section 1360 generates a bandwidth control response message including the determination result and permitted bandwidth control information and transmits it to the VPN gateway 100. Further, the COPS processing section 1360 distributes the traffic information and bandwidth control information to the LAN devices on the mobile communication traffic path or all LAN devices in the LAN 20.

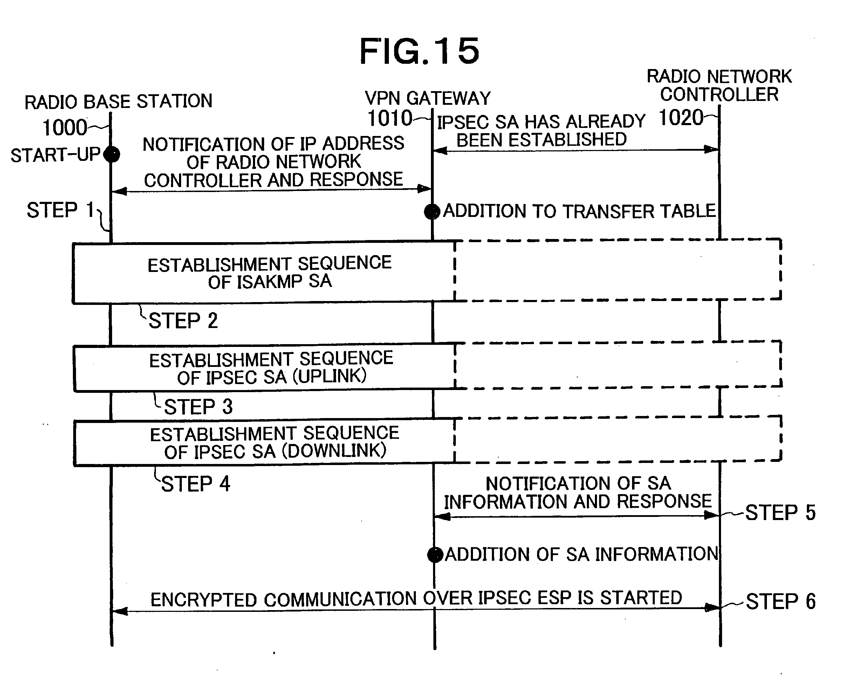

An operation sequence for establishing a communication path between the radio network controller 70 and radio base station 60 in the mobile communication system according to the first embodiment of the present invention will be described in detail below with reference to FIG. 15. In FIG. 15, a packet transmission and reception sequence 1000 of the radio base station 60, a packet transmission and reception sequence 1010 of the VPN gateway 100, and a packet transmission and reception sequence 1020 of the radio network controller 70 are shown.

In this embodiment, it is assumed that SA is previously established between the VPN gateway 100 and radio network controller 70 (that is, encrypted communication using a first encryption key can be performed) and that a pre-shared key needed to establish SA between the radio base station 60 and VPN gateway 100 (that is, needed at the time of establishing encrypted communication using a second encryption key) is previously set between the radio network controller 70 and radio base station 60.

Hereinafter, a more detailed operation sequence will be described. When being started, the radio base station 60 acquires a private IP address of its own via a Dynamic Host Configuration Protocol (DHCP) and uses a Domain Name Server (DNS) to acquire the private IP address of the VPN gateway 100.

Thereafter, the radio base station 60 notifies the VPN gateway 100 of the global address and operator's uniquely assigned address of the radio network controller 70 and private address and operator's uniquely assigned address of the radio base station 60 on an address notification message.

Upon receiving the message, the VPN gateway 100 adds the notified addresses to the transfer table 900, sets a timer for deleting the set entries, and returns an address notification response message (step (1)).

Upon receiving the return message, the radio base station 60 establishes Internet Security Association and Key Management Control (ISAKMP) SA and two IPsec SAs (uplink and down link) between itself and VPN gateway 100 (steps (2) to (4)). In this case, the VPN gateway 100 only performs address conversion for an IKE packet received from the radio base station 60 and transfers the address-converted IKE packet to the radio network controller 70.

The VPN gateway 100 also performs address conversion for an IKE packet received from the radio network controller 70 and transfers the address-converted IKE packet to the radio base station 60.

After SA has been established between the radio network controller 70 and radio base station 60 as described above, the radio network controller 70 notifies the VPN gateway 100 of all SA information on a SA information addition message.

The VPN gateway 100 adds the received SA information to a database, releases the timer set in step (1), and notifies the radio network controller 70 of completion of setting on a SA information addition response message (step (5)).

As a result, encrypted communication (encrypted communication using the second encryption key) over the IPsec is enabled between the VPN gateway 100 and radio base station 60 and, via the VPN gateway 100, encrypted communication over the IPsec SA can be started between the radio base station 60 and radio network controller 70 (step (6)).

If the VPN gateway 100 does not receives the SA information addition message and the timer exceeds a specified time-out limit, the VPN gateway 100 immediately deletes the added entries in the transfer table 900.

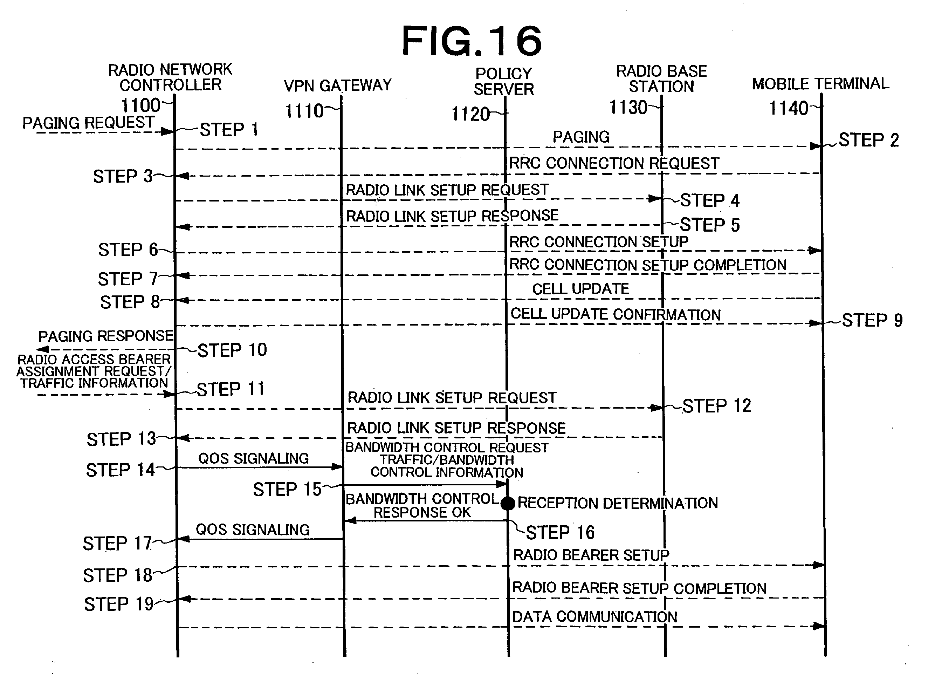

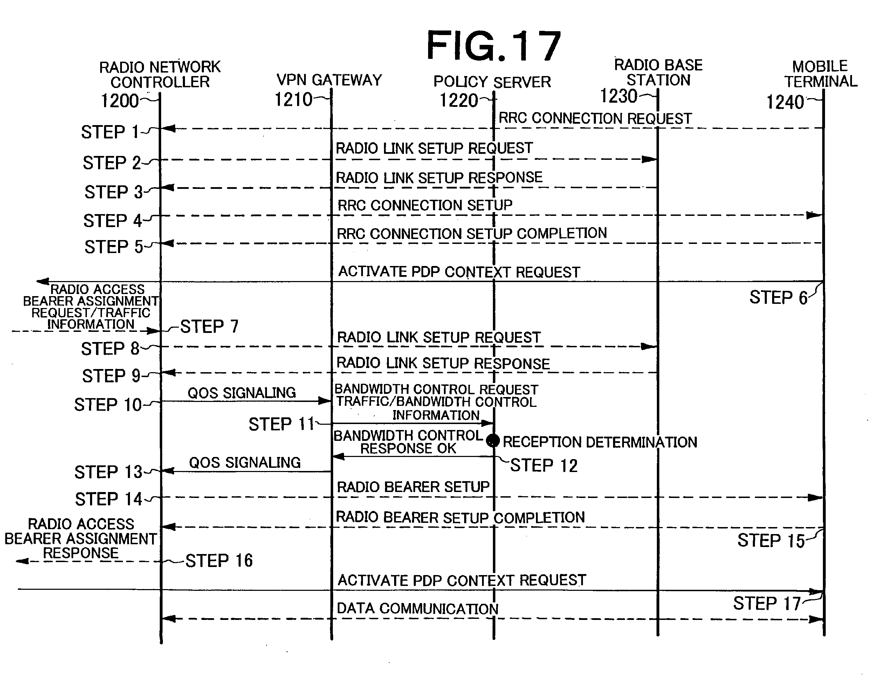

A bandwidth control operation sequence for the user traffic between the radio network controller 70 and radio base station 60 in the mobile communication system according to the first embodiment of the present invention will be described in detail with reference to FIGS. 16 and 17.

FIG. 16 shows an operation sequence in the case where a mobile terminal receives a call. In FIG. 16, a packet transmission and reception sequence 1100 of the radio network controller 70, a packet transmission and reception sequence 1110 of the VPN gateway 100, a packet transmission and reception sequence 1120 of the policy server 200, a packet transmission and reception sequence 1130 of the radio base station 60, and a packet transmission and reception sequence 1140 of the mobile terminal 80 are shown.

Upon receiving a paging request massage from the mobile communication core network 30 (step (1)), the radio network controller 70 pages the mobile terminal 80 (step (2)). Correspondingly, the mobile terminal 80 transmits an RRC connection request to the radio network controller 70 (step (3)). Upon receiving the RRC connection request, the radio network controller 70 transmits a radio link setup request to the radio base station 60 (step (4)).

After completing the radio link setup, the radio base station 60 returns a radio link setup response to the radio network controller 70 (step (5)). The radio network controller 70 transmits an RRC connection setup to the mobile terminal 80 (step (6)).

Upon receiving the RRC connection setup, the mobile terminal 80 sets up various parameters and transmits an RRC connection setup completion to the radio network controller 70 (step (7)). After that, the mobile terminal 80 performs location registration by sending a cell update message (step (8)).

Upon receiving the cell update message, the radio network controller 70 returns a cell update confirmation massage (step (9)) to the mobile terminal 80 and, at the same time, sends back a paging response to the mobile communication core network 30 (step (10)). After that, the radio base controller 70 receives a radio access bearer assignment request message from the mobile communication core network 30 (step (11)) and sets up a radio link based on QoS information included in the radio bearer establishment request message.

More specifically, the radio network controller 70 transmits a radio link setup request to the radio base station 60 (step (12)). After completing the radio link setup, the radio base station 60 returns a radio link setup response to the radio network controller 70 (step (13)).

Upon receiving the radio link setup response, the radio network controller 70 generates a QoS signaling including requested QoS information and transmits it to the radio base station 60 (step (14)).

The VPN gateway intercepts this QoS signaling and transmits a bandwidth control request message including traffic information extracted from the QoS signaling to the policy server 200 (step (15)). The QoS signaling thus transmitted is, e.g., an IP-ALCAP (Access Link Control Application Part) signaling.

The policy server 200 makes a reception determination based on the collected bandwidth control state information and traffic information notified on the bandwidth control request message and transmits a bandwidth control response message including a reception determination result and permitted bandwidth control information to the VPN gateway 100 (step (16)).

The VPN gateway 100 transmits, to the radio network controller 70, a QoS signaling including the reception determination result and bandwidth control information which are included in the bandwidth control response message (step (17)). In this embodiment, the policy server 200 determines "reception permission".

When determining reception permission, the policy server 200 also performs distribution of traffic information and bandwidth control information to LAN devices in the LAN 20 (not shown). After completion of bandwidth assurance in the LAN, the radio network controller 70 transmits a radio bearer setup to the mobile terminal 80 (step (18)).

Upon receiving the radio bearer setup, the mobile terminal 80 sets up a radio bearer and, after the completion of the bearer setup, returns a radio bearer setup completion (step (19)). After that, the mobile terminal 80 performs data communication via the radio network controller 70 and mobile communication core network 30. The LAN devices located on the mobile communication traffic path within the LAN 20 performs bandwidth control for the user data traffic based on the notified traffic information and bandwidth control information.

FIG. 17 shows an operation sequence in the case where the mobile terminal 80 makes a call. In FIG. 17, a packet transmission and reception sequence 1200 of the radio network controller 70, a packet transmission and reception sequence 1210 of the VPN gateway 100, a packet transmission and reception sequence 1220 of the policy server 200, a packet transmission and reception sequence 1230 of the radio base station 60, and a packet transmission and reception sequence 1240 of the mobile terminal 80 are shown.

The mobile terminal 80 transmits an RRC connection request to the radio network controller 70 by a data transmission request serving as a trigger (step (1)). Upon receiving the RRC connection request, the radio network controller 70 transmits a radio link setup request to the radio base station 60 (step (2)). The radio base station 60 enables the radio link setup and returns a radio link setup response to the radio network controller 70 (step (3)).

Upon receiving the radio link setup response from the radio base station 60, the radio network controller 70 transmits an RRC connection setup to the mobile terminal 80 (step (4)). After completion of the radio link setup, the mobile terminal 80 transmits an RRC connection setup completion to the radio network controller 70 (step (5)). Further, the mobile terminal 80 transmits an activate PDP context request including the QoS information related to a service to be used to the mobile communication core network 30 (step (6)).

Upon receiving the activate PDP context request, the mobile communication core network 30 transmits a radio access bearer assignation request to the radio network controller 70 (step (7)). The radio network controller 70 sets up a radio link based on QoS information included in the radio access bearer assignment request. More specifically, the radio network controller 70 transmits a radio link setup request to the radio base station 60 (step (8)). After completing the radio link setup, the radio base station 60 returns a radio link setup response to the radio network controller 70 (step (9)).

Upon receiving the radio link setup response, the radio network controller 70 generates a QoS signaling including QoS information and transmits it to the radio base station 60 (step (10)). The VPN gateway 100 intercepts this QoS signaling and transmits a bandwidth control request message including the QoS information extracted from the received QoS signaling to the policy server 200 (step (11)).

The policy server 200 makes a reception determination based on the collected bandwidth control state information and QoS information notified on the bandwidth control request message and transmits a bandwidth control response message including a reception determination result and permitted bandwidth control information to the VPN gateway 100 (step (12)).

The VPN gateway 100 transmits, to the radio network controller 70, a QoS signaling including the reception determination result and bandwidth control information which are included in the bandwidth control response message (step (13)). Also in this embodiment, the policy server 200 determines "reception permission".

When determining "reception permission", the policy server 200 also performs distribution of traffic information and bandwidth control information to LAN devices in the LAN 20 (not shown). After that, the radio network controller 70 transmits a radio bearer setup to the mobile terminal 80 (step (14)).

The mobile terminal 80 sets up a radio link and, after the completion of the radio link setup, notifies a radio bearer setup completion to the radio network controller 70 (step (15)). Upon receiving the radio bearer setup completion, the radio network controller 70 returns a radio access bearer assignation response to the mobile communication core network 30 (step (16)).

Upon receiving an activate PDP context reception (acceptance) from the mobile communication core network 30 (step (17)), the mobile terminal 80 starts performing data communication via the radio network controller 70 and mobile communication core network 30. The LAN devices located on the mobile communication traffic path within the LAN 20 performs bandwidth control for the user data traffic based on the notified traffic information and bandwidth control information.

A mobile communication system according to a second embodiment of the present invention will be described with reference to the network configuration diagrams shown in FIGS. 1 and 2. In the second embodiment, the radio network controller 70 has the configuration as shown in FIG. 18.

Compared with the configuration of the radio network controller 70 of the first embodiment, the IP transport processing section 430 includes an authentication processing section 450 in addition to the IP processing section 380, L4 processing section 370, and IPsec processing section 410 in the second embodiment.

The authentication processing section 450 performs authentication processing between itself and radio base stations 60 to 63. When the authentication is successfully achieved, the authentication processing section 450 generates a pre-shared key using a key exchange mechanism. After SA is established, the radio network controller 70 notifies the VPN gateway 100 of the generated pre-shared key. The VPN gateway 100 uses the pre-shared key to establish IPsec SA between itself and radio base stations 60 to 63.

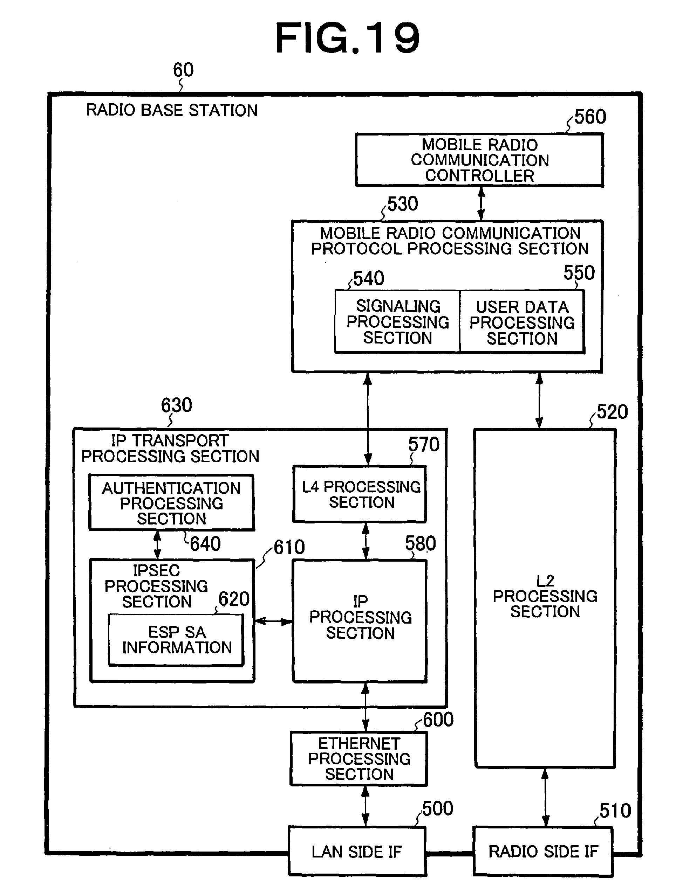

The radio base station 60 has the configuration as shown in FIG. 19. While the radio base station 60 is shown here, the radio base stations 61 to 63 have the same configuration as that of the radio base station 60. Compared with the configuration of the radio base station 60 of the first embodiment, the IP transport processing section 630 includes an authentication processing section 640 in addition to the IP processing section 580, L4 processing section 570, and IPsec processing section 610 in the second embodiment. The authentication processing section 640 has the same function as that of the abovementioned authentication processing section 450 to perform authentication processing between itself and the radio network controller 70.

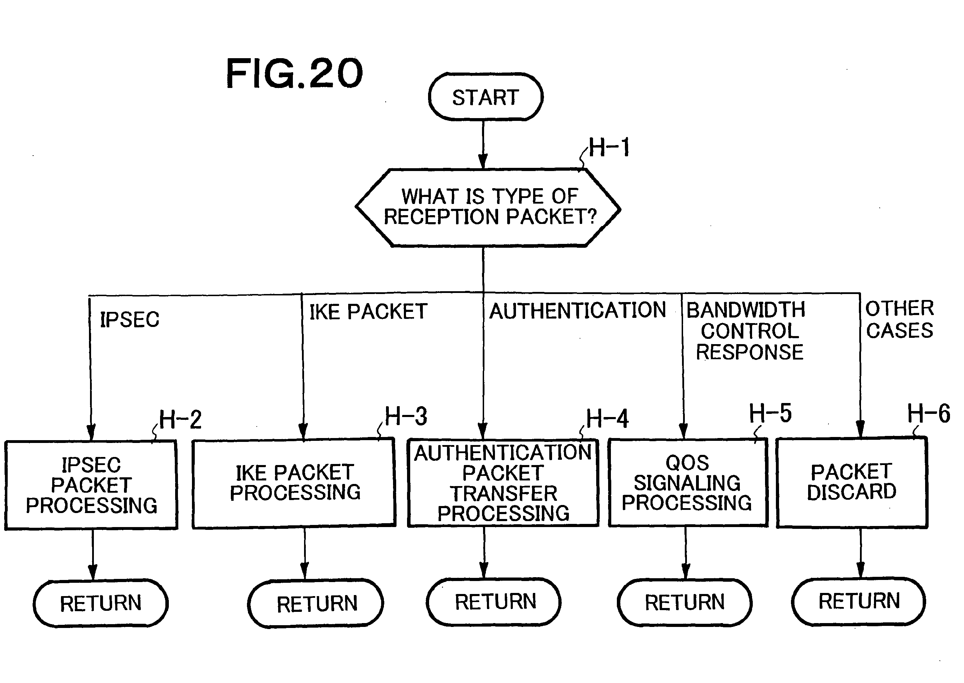

An operation flow of the VPN gateway 100 will be described with reference to FIGS. 20 to 22.

FIG. 20 shows the entire process flow. The VPN gateway 100 starts processing by firstly receiving a packet and determines the type of the packet (step H-1). When determining that the received packet is an IPsec packet, the VPN gateway 100 performs IPsec packet processing to be described later (step H-2). When the received packet is an IKE packet, the VPN gateway 100 performs IKE packet processing specified by Request for Comments (RFC) 2409 (step H-3). When the received packet is an authentication packet, the VPN gateway 100 performs authentication packet transfer processing to be described later (step H-4). When the received packet is a bandwidth control response message, the VPN gateway 100 performs QoS signaling processing (step H-5). The QoS signaling processing performed here is the same as that described in the first embodiment. In the case where the received packet is other than the above, the VPN gateway 100 discards the received packet (step H-6).

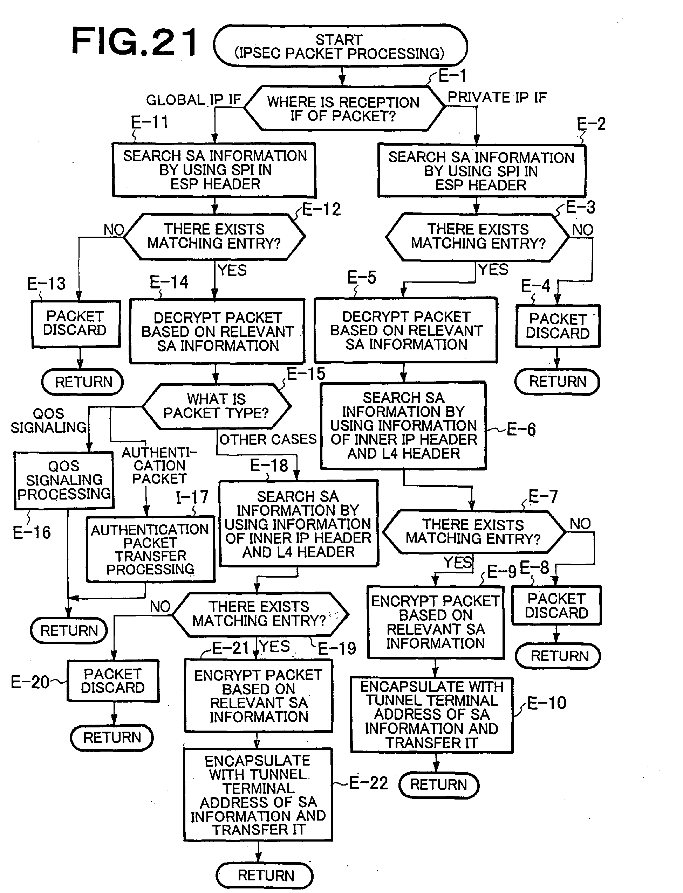

FIG. 21 shows a flow of the IPsec packet processing performed by the VPN gateway 100 in the step H-2. In the IPsec packet processing of FIG. 12 which has been described in the first embodiment, in the case where the VPN gateway 100 receives a packet via the global IF and searches SA information using the SPI in the ESP header, where the searched entry is found, and where the packet type is a SA information addition/deletion request, the VPN gateway 100 performs the SA information addition/deletion processing in step E-17. In the second embodiment, however, in the case where the packet type is not a SA information addition/deletion request but an authentication packet, the VPN gateway 100 performs the authentication packet transfer processing in place of the SA information addition/deletion processing (step 1-17).

Other steps are the same as those shown in FIG. 12. In FIG. 21, the same reference numerals are given to the steps which are common to the first embodiment, and the descriptions thereof are omitted.

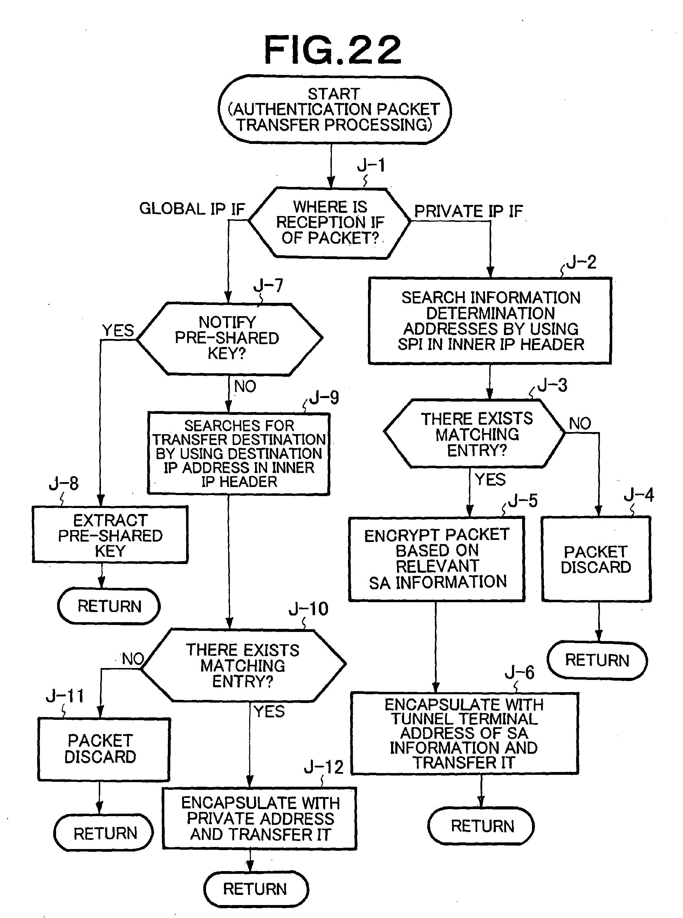

FIG. 22 shows a flow of the authentication packet transfer processing performed in the step 1-17 of FIG. 21. In this processing, the VPN gateway 100 firstly specifies the IF via which it has received a packet (step J-1).

When determining that a reception IF has been the private IP IF, the VPN gateway 100 searches list of SA information by using the SPI in the inner IP header to determine whether there exists a matching entry (steps J-2, J-3).

When determining that there is no matching entry, the VPN gateway 100 discards the packet (step J-4).

When determining that there exits a matching entry, the VPN gateway 100 decrypts the packet based on the matching SA information (step J-5) and encapsulates the packet with the tunnel terminal IP address of the SA information so as to transfer it (step J-6).

On the other hand, when determining, in step J-1, that a reception IF has been the global IP IF, the VPN gateway 100 determines whether the received packet is a pre-shared key notification message or not (step J-7).

When determining that the packet is a pre-shared key notification message, the VPN gateway 100 extracts a pre-shared key in the message and notifies the IPsec processing section 760 of the pre-shared key (step J-8).

In the cases other than the above, the VPN gateway 100 searches the transfer table 900 by using the destination IP address in the inner IP header to determine whether there exists a matching entry (steps J-9, J-10).

When determining that there is no matching entry, the VPN gateway 100 discards the packet (step J-11). When there exists a matching entry, the VPN gateway 100 encapsulates the packet with the private address of the matching entry and transfers it (step J-12).

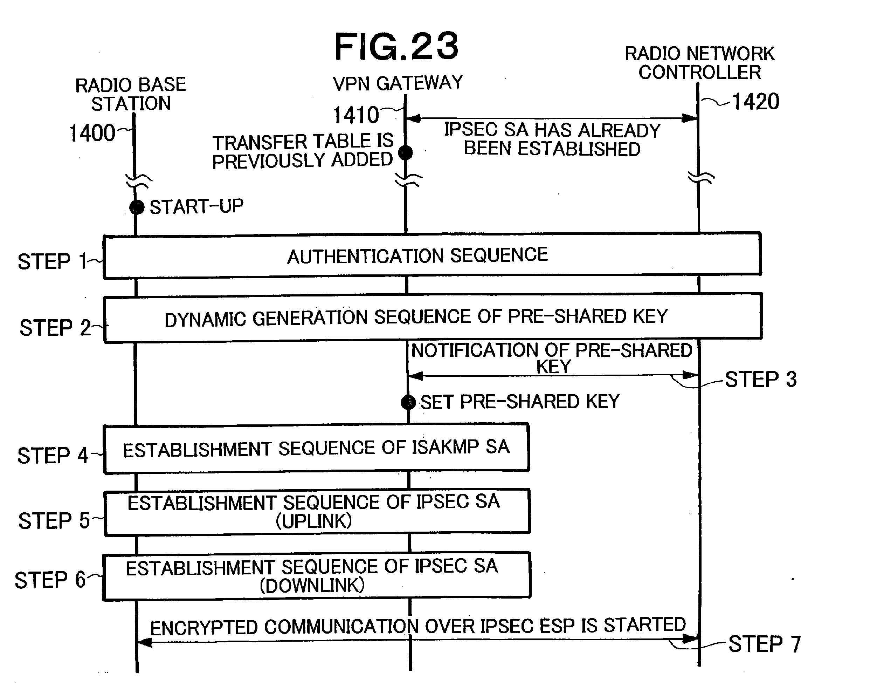

An operation sequence for establishing a communication path between the radio network controller 70 and radio base station 60 in the mobile communication system according to the second embodiment of the present invention will be described in detail below with reference to FIG. 23.

In the second embodiment, it is assumed that an authentication key used for mutual authentication between the radio base station 60 and radio network controller 70 is previously set and that SA is previously established between the radio network controller 70 and VPN gateway 100 (that is, encrypted communication using a first encryption key can be performed). Further, it is assumed that the transfer table 900 of the VPN gateway 100 is previously set. In FIG. 23, a packet transmission and reception sequence 1400 of the radio base station 60, a packet transmission and reception sequence 1410 of the VPN gateway 100, and a packet transmission and reception sequence 1420 of the radio network controller 70 are shown.

When being started, the radio base station 60 uses the previously set authentication key to perform mutual authentication between itself and radio network controller 70 (step (1)). For example, a challenge-response password authentication using an authentication key can be used in this case.

When the mutual authentication is successfully achieved, a key exchange mechanism is used to generate a pre-shared key from the authentication key in the radio base station 60 and radio network controller 70 (step (2)). For example, a Diffie-Hellman key exchange can be used as the key exchange mechanism.

After completion of the key generation, the radio network controller 70 notifies the VPN gateway 100 of the generated pre-shared key (step (3)).

The radio base station 60 uses the pre-shared key generated by using the abovementioned key exchange mechanism to establish ISAKMP SA (step (4)).

After establishing the ISAKMP SA, the radio base station 60 establishes IPsec SA (uplink) and IPsec SA (downlink) (steps (5), (6)).

After the establishment of the uplink and downlink IPsec SA, the radio base station 60 and radio network controller 70 can perform encrypted communication on IPsec ESP between them via the VPN gateway 100 (step (7)).

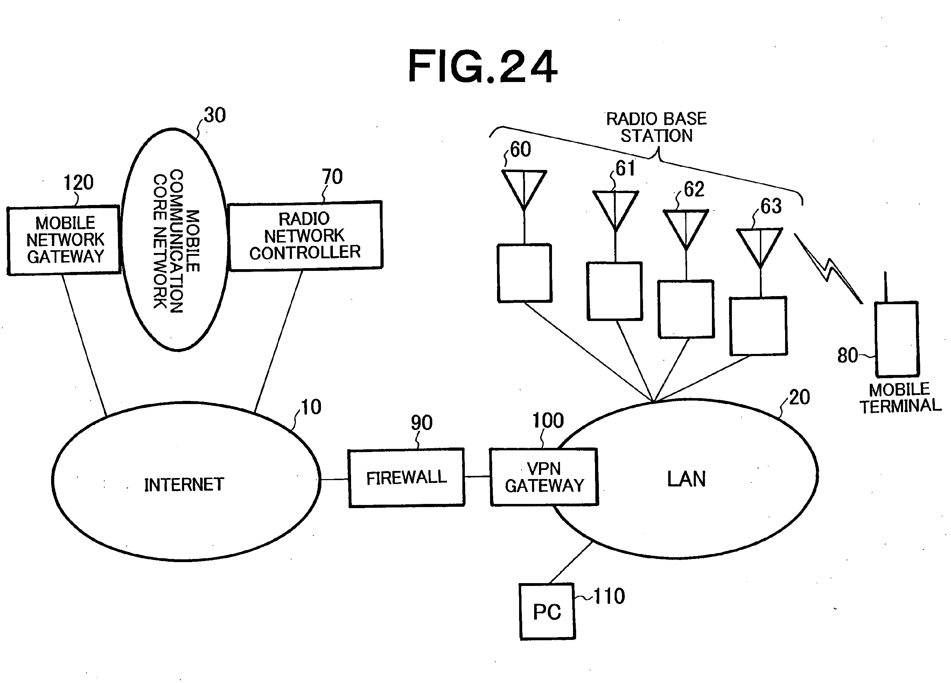

In the abovementioned configuration, the functions of the VPN gateway 100 and radio network controller 70 can be realized not only in a hardware manner, but also in a software manner. In this case, a program (program for relay node) that realizes the function of the VPN gateway 100 in a software manner and a control program (program for radio network controller) that realizes the function of the radio network controller 70 in a software manner are executed on computers that constitute the VPN gateway 100 and radio network controller 70, respectively. These programs are stored in a recording medium such as a magnetic disk or semiconductor memory, loaded into the computers serving as the VPN gateway 100 and radio network controller 70 from the recording medium. The programs thus loaded into the computers control the operation of the computers to thereby realize the abovementioned functions. FIG. 24 is a block diagram showing a configuration example of a computer. In this configuration, each of the VPN gateway 100 and radio base controller 70 is implemented as a program on a computer. As shown in FIG. 24, the program that realizes the function of the VPN gateway 100 or radio base controller 70 is stored in a disk apparatus 2004 such as a hard disk, information such as traffic information which is included in a mobile communication control signaling between the radio network controller and radio base station, established SA information or a pre-shared key needed for the establishment of the SA, is stored in a memory 2003 such as a DRAM, and a CPU 3206 executes the program to thereby realize the functions of the VPN gateway 100 and radio network controller 70. A keyboard 3001 serves as an input means. A display (indicated as LCD in the drawing) 2002 such as a CRT or LCD displays an information processing state and the like. Reference numeral 3005 denotes a bus such as a data bus.

Although exemplary embodiments of the present invention have been shown and described, the present invention is not limited to the above embodiments, and various modifications may be made without departing from the scope of the technical idea of the present invention.

### Industrial Applicability

The present invention is applied to a mobile communication system capable of providing a mobile communication service to users within an indoor environment by using a private network.

### Brief Description of Drawings

FIG. 1 is a block diagram showing the entire configuration of a network according to a first embodiment of the present invention;
FIG. 2 is a block diagram showing a configuration of a LAN according to the first embodiment of the present invention;
FIG. 3 is a block diagram showing a configuration of a radio network controller according to the first embodiment of the present invention;
FIG. 4 is a block diagram showing a configuration of a radio base station according to the first embodiment of the present invention;
FIG. 5 is a block diagram showing a configuration of a VPN gateway according to the first embodiment of the present invention;
FIG. 6 is a block diagram showing a configuration of a policy server according to the first embodiment of the present invention;
FIGs. 7A and 7B are a view showing a configuration example of a transfer table in the first embodiment of the present invention;
FIG. 8 is a view showing a configuration of a packet format in the first embodiment of the present invention;
FIG. 9 is a flowchart explaining the entire process performed by the VPN gateway in the first embodiment of the present invention;
FIG. 10 is a flowchart explaining address notification processing performed by the VPN gateway in the first embodiment of the present invention;
FIG. 11 is a flowchart explaining SA information addition/deletion processing performed by the VPN gateway in the first embodiment of the present invention;
FIG. 12 is a flowchart explaining IPsec packet processing performed by the VPN gateway in the first embodiment of the present invention;
FIG. 13 is a flowchart explaining IKE packet processing performed by the VPN gateway in the first embodiment of the present invention;
FIG. 14 is a flowchart explaining QoS signaling processing performed by the VPN gateway in the first embodiment of the present invention;
FIG. 15 is a sequence diagram at the start of communication between the radio network controller and radio base station in the first embodiment of the present invention;
FIG. 16 is a sequence diagram showing bandwidth control operation at the time of incoming call in the first embodiment of the present invention;
FIG. 17 is a sequence diagram showing bandwidth control operation at the time of call request in the first embodiment of the present invention;

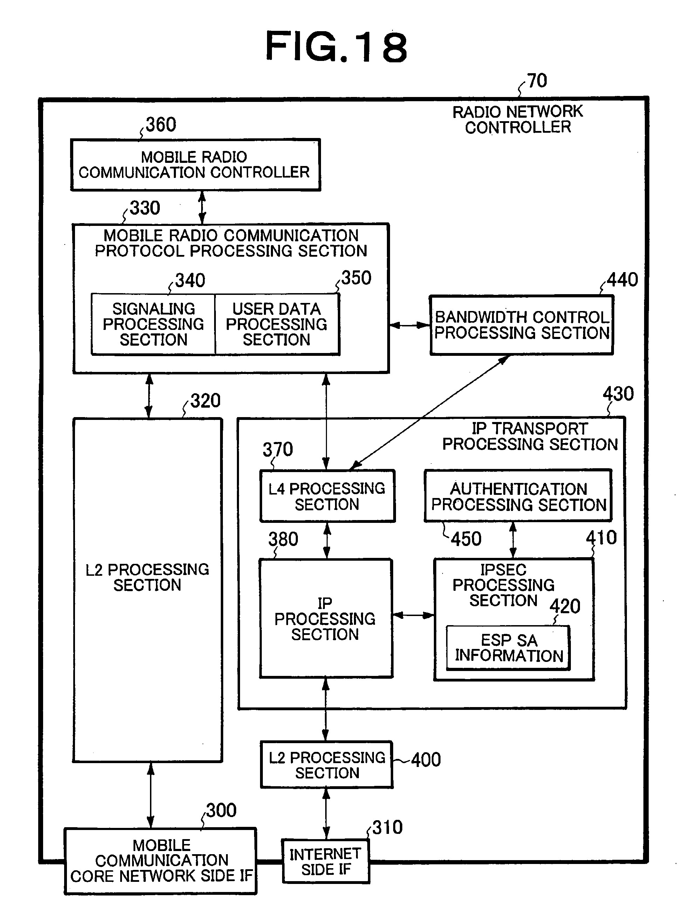

FIG. 18 is a block diagram showing a configuration of the radio network controller according to a second embodiment of the present invention;
FIG. 19 is a block diagram showing a configuration of the radio base station according to the second embodiment of the present invention;
FIG. 20 is a flowchart explaining the entire process performed by the VPN gateway in the second embodiment of the present invention;
FIG. 21 is a flowchart explaining IPsec packet processing performed by the VPN gateway in the second embodiment of the present invention;
FIG. 22 is a flowchart explaining authentication packet transfer processing performed by the VPN gateway in the second embodiment of the present invention;
FIG. 23 is a sequence diagram at the start of communication between the radio network controller and radio base station in the second embodiment of the present invention; and
FIG. 24 is a block diagram showing a configuration example of a computer.

### Explanation of Reference Numerals

- 10:: Internet
- 20:: LAN
- 30:: Mobile communication core network
- 60, 61, 62, 63:: Radio base station
- 70:: Radio network controller
- 80:: Mobile terminal
- 90:: Firewall
- 100:: VPN gateway
- 110:: PC
- 120:: Mobile network gateway
- 200:: Policy server
- 210:: Router
- 220 to 223:: Ethernet (registered trademark) switch
- 300:: Mobile communication core network side IF
- 310:: Internet side IF
- 320, 400, 520:: L2 processing section
- 330, 530:: Mobile radio communication protocol processing section
- 340, 540:: Signaling processing section
- 350, 550:: User data processing section
- 360, 560:: Mobile radio communication controller
- 370, 570:: L4 processing section
- 380, 580:: IP processing section
- 410, 610, 760:: IPsec processing section
- 420, 620, 770:: ESP SA information
- 430, 630:: IP transport processing section
- 440, 780:: Bandwidth control processing section
- 450, 640:: Authentication processing section
- 500:: LAN side IF
- 510:: Radio side IF
- 600, 710, 740:: Ethernet (registered trademark) processing section
- 700:: Private IP IF
- 720:: Tunnel transfer processing section
- 730:: Routing information
- 750:: Global IP IF
- 800, 801:: Outer IP header
- 810 811:: ESP header
- 820, 821:: Inner IP header
- 830, 831:: L4 header
- 840, 841:: Payload
- 850, 851:: ESP trailer
- 900:: Transfer table
- 1000, 1130, 1230, 1400:: Packet transmission and reception sequence of radio base station
- 1010, 1110, 1210, 1410:: Packet transmission and reception sequence of VPN gateway
- 1020, 1100, 1200, 1420:: Packet transmission and reception sequence of radio network controller
- 1120, 1220:: Packet transmission and reception sequence of policy server
- 1140, 1240:: Packet transmission and reception sequence of mobile terminal
- 1300:: LAN IF
- 1310:: Ethernet (registered trademark) processing section
- 1320:: IP processing section
- 1330:: L4 processing section
- 1340:: Control protocol processing section
- 1350:: Bandwidth control processing section
- 1360:: COPS processing section
- 1370:: SNMP processing section

## Claims

1. A mobile communication system which comprises a radio network controller and a radio base station connected to said radio network controller and which provides a mobile communication service to a mobile terminal connectable to said radio base station, wherein
said radio base station is installed within a private network,
a relay node installed in said private network relays mobile communication traffic transmitted on said private network between said radio network controller and said radio base station, and
when said mobile terminal makes or receives a call, said relay node performs reception determination processing in cooperation with bandwidth management function in said private network and provides a communication line to said mobile terminal when permitting the reception.

2. The mobile communication system according to claim 1, wherein said relay node receives a bandwidth control signaling that said radio network controller transmits to said radio base station when said mobile terminal makes or receives a call to thereby start the reception determination processing.

3. The mobile communication system according to claim 1, wherein said relay node is a VPN gateway.

4. A mobile communication system which comprises a radio network controller and a radio base station connected to said radio network controller and which provides a mobile communication service to a mobile terminal connectable to said radio base station, wherein
said radio base station is installed within a private network,
a relay node installed in said private network relays mobile communication traffic transmitted on said private network between said radio network controller and said radio base station,
first and second encryption keys are used, respectively, between said radio network controller and relay node and between said radio base station and relay node to perform encrypted communication, and
a pre-shared key needed to generate said second encryption key is dynamically generated by a key exchange mechanism between said radio network controller and radio base station, said generated pre-shared key being notified from said radio network controller to said relay node.

5. A mobile communication system which comprises a radio network controller and a radio base station connected to said radio network controller and which provides a mobile communication service to a mobile terminal connectable to said radio base station, wherein
said radio base station is installed within a private network,
mobile communication traffic between a relay node which is connected to said radio base station via said private network and said radio base station is transmitted on said private network,
said relay node relays the mobile communication traffic transmitted on said private network between said radio network controller and said radio base station,
first and second encryption keys are used, respectively, between said radio network controller and relay node and between said radio base station and relay node to perform encrypted communication, and
said second encryption key is dynamically generated by a key exchange mechanism between said radio network controller and said radio base station, the generated second encryption key being notified from said radio network controller to said relay node.

6. The mobile communication system according to claim 4, wherein
said radio network controller comprises means for dynamically generating said pre-shared key by using a key exchange mechanism between itself and said radio base station, and means for notifying said relay node of said generated pre-shared key.

7. The mobile communication system according to claim 5, wherein
said radio network controller comprises means for dynamically generating said second encryption key by using a key exchange mechanism between itself and said radio base station, and means for notifying said relay node of said generated second encryption key.

8. A relay node which relays mobile communication traffic between a radio base station and a radio network controller, wherein
said relay node is installed in a private network in which said radio base station is installed and relays mobile communication traffic transmitted on said private network between said radio network controller and said radio base station,
said relay node comprising:
means for receiving a bandwidth control signaling that said radio network controller transmits to said radio base station;
means for extracting traffic information comprises in the bandwidth control signaling;
means for performing reception determination in cooperation with a bandwidth management mechanism within said private network; and
means for transmitting the bandwidth control signaling including a result of the reception determination and bandwidth control information whose reception has been permitted.

9. A relay node which relays mobile communication traffic between a radio base station and a radio network controller, wherein
said relay node is installed in a private network in which said radio base station is installed and relays mobile communication traffic transmitted on said private network between said radio network controller and said radio base station, and
said relay node is connected to said radio base station and radio network controller and performs encrypted communication with said radio network controller by using a first encryption key and with said radio base station by using a second encryption key,
said relay node comprising:
means for receiving a pre-shared key for generating the second encryption key from said radio network controller;
means for dynamically generating said second encryption key between itself and said radio base station by using said pre-shared key; and
means for encrypting the mobile communication traffic by using said second encryption key.

10. A relay node which relays mobile communication traffic between a radio base station and a radio network controller, wherein
said relay node is installed in a private network in which said radio base station is installed and relays mobile communication traffic transmitted on said private network between said radio network controller and said radio base station, and
said relay node is connected to said radio base station and radio network controller and performs encrypted communication with said radio network controller by using a first encryption key and with said radio base station by using a second encryption key,
said relay node comprising:
means for receiving said second encryption key from said radio network controller; and
means for encrypting the mobile communication traffic by using said second encryption key.

11. A radio network controller connected to a plurality of radio base stations via a relay node which performs encrypted communication with said radio base stations by using different encryption keys, said radio network controller comprising:
means for dynamically generating a pre-shared key needed to generate said encryption key between itself and said radio base station by using a key exchange mechanism; and
means for notifying said relay node of the generated pre-shared key.

12. A radio network controller connected to a plurality of radio base stations via a relay node which performs encrypted communication with said radio base stations by using different encryption keys, said radio network controller comprising:
means for dynamically generating said encryption key between itself and said radio base stations by using a key exchange mechanism; and
means for notifying said relay node of the generated encryption key.

13. A relay node program allowing a computer serving as a relay node which relays mobile communication traffic between a radio base station and radio network controller to execute a function of relaying mobile communication traffic transmitted on a private network between the radio network controller and radio base station, said computer serving as a relay node and radio base station being installed within said private network,
said program further allowing the computer to execute functions of: receiving a bandwidth control signaling that said radio network controller transmits to said radio base station: extracting traffic information comprises in the bandwidth control signaling; performing reception determination in cooperation with a bandwidth management mechanism within said private network; and transmitting the bandwidth control signaling including a result of the reception determination and bandwidth control information whose reception has been permitted.

14. A relay node program allowing a computer serving as a relay node which relays mobile communication traffic between a radio base station and radio network controller to execute a function of relaying mobile communication traffic transmitted on a private network between said radio network controller and radio base station, and to perform encrypted communication with said radio network controller by using a first encryption key and with said radio base station by using a second encryption key, said computer serving as a relay node and radio base station being installed within said private network,
said program further allowing the computer to execute functions of: receiving a pre-shared key for generating said second encryption key from said radio network controller; dynamically generating said second encryption key between itself and said radio base station by using said pre-shared key; and encrypting the mobile communication traffic by using said second encryption key.

15. A relay node program allowing a computer serving as a relay node which relays mobile communication traffic between a radio base station and radio network controller to execute a function of relaying mobile communication traffic transmitted on a private network between said radio network controller and radio base station, and to perform encrypted communication with said radio network controller by using a first encryption key and with said radio base station by using a second encryption key, said computer serving as a relay node and radio base station being installed within said private network,
said program further allowing the computer to execute functions of: receiving said second encryption key from said radio network controller; and encrypting the mobile communication traffic by using said second encryption key.

16. A radio network controller program allowing a computer serving as a radio network controller connected to a plurality of radio base stations via a relay node which performs encrypted communication with said radio base stations by using different encryption keys to execute functions of:
dynamically generating a pre-shared key needed to generate said encryption key between itself and said radio base station by using a key exchange mechanism; and notifying said relay node of the generated pre-shared key.

17. A radio network controller program allowing a computer serving as a radio network controller connected to a plurality of radio base stations via a relay node which performs encrypted communication with said radio base stations by using different encryption keys to execute functions of:
dynamically generating said encryption key between itself and
said radio base station by using a key exchange mechanism; and
notifying said relay node of the generated encryption key.

18. A mobile communication method for use in a mobile communication system which comprises a radio network controller and a radio base station connected to said radio network controller and which provides a mobile communication service to a mobile terminal connectable to said radio base station, wherein
said radio base station and relay node are installed within a private network comprised said the mobile communication system,
said relay node relays mobile communication traffic transmitted on said private network between said radio network controller and radio base station, and
when said mobile terminal makes or receives a call, said relay node performs reception determination processing in cooperation with bandwidth control in the private network and provides a communication line to said mobile terminal when permitting the reception.

19. A mobile communication method for use in a mobile communication system which comprises a radio network controller and a radio base station connected to said radio network controller and which provides a mobile communication service to a mobile terminal connectable to said radio base station, wherein
said radio base station and relay node are installed within a private network comprised in said mobile communication system,
a relay node relays mobile communication traffic transmitted on said private network between said radio network controller and radio base station,
first and second encryption keys are used, respectively, between said radio network controller and relay node and between said radio base station and relay node to perform encrypted communication, and
a pre-shared key needed to generate said second encryption key is generated by a key exchange mechanism between said radio network controller and radio base station, the generated pre-shared key being notified from said radio network controller to said relay node.

20. A mobile communication method for use in a mobile communication system which comprises a radio network controller and a radio base station connected to said radio network controller and which provides a mobile communication service to a mobile terminal connectable to said radio base station, wherein
said radio base station is installed within a private network and is connected to a relay node via said private network in said mobile communication system,
mobile communication traffic between said relay node and radio base station is transmitted on said private network,
said relay node relays the mobile communication traffic transmitted on said private network between said radio network controller and radio base station,
first and second encryption keys are used, respectively, between said radio network controller and relay node and between said radio base station and relay node to perform encrypted communication, and
said second encryption key is dynamically generated by a key exchange mechanism between said radio network controller and radio base station, the generated second encryption key being notified from said radio network controller to said relay node.
